(19)

Europäisches Patentamt
European Patent Office
Office européen des brevets

(11) **EP 3 735 835 A1**

(12) **EUROPEAN PATENT APPLICATION**

(43) Date of publication:
**11.11.2020 Bulletin 2020/46**

(21) Application number: **19305608.2**

(22) Date of filing: **10.05.2019**

(51) Int Cl.:
*A23J 1/14* (2006.01)     *A23J 3/14* (2006.01)
*A23L 2/66* (2006.01)     *A23L 11/30* (2016.01)
*B01D 61/14* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **Avril**
**75008 Paris (FR)**
• **Université de Lorraine**
**54052 Nancy Cedex (FR)**

• **CENTRE NATIONAL DE LA RECHERCHE
SCIENTIFIQUE**
**75794 Paris Cedex 16 (FR)**

(72) Inventors:
• **GALET, Olivier**
**22950 Trégueux (FR)**
• **KAPEL, Romain**
**54130 Saint Max (FR)**
• **ALBE SLABI, Sara**
**41-800 Zabrze (PL)**

(74) Representative: **LLR**
**11 boulevard de Sébastopol**
**75001 Paris (FR)**

(54) **SUNFLOWER ALBUMIN ISOLATE AND PROCESS FOR THE PRODUCTION THEREOF**

(57)     The invention relates to a process for producing a sunflower protein isolate, said process comprising the following steps:
(f) providing a sunflower seed press cake, preferably a sunflower seed cold press cake;
(g) mixing said sunflower seed press cake with an aqueous NaCl solution at a pH ranging from 3 to 4.5, in order to solubilize proteins present in said sunflower seed press cake and to thus obtain a solubilised protein solution, wherein said aqueous NaCl solution has a NaCl concentration ranging from 0.2 to 0.6 mol.L$^{-1}$;
(h) separating said solubilised protein solution from solids therein;
(i) subjecting said solubilised protein solution obtained in step c) to one or several membrane filtration(s) to obtain a protein isolate, and
optionally drying said protein isolate to obtain a dry sunflower protein isolate. The invention also relates to a sunflower protein isolate and its use and product which incorporate.

EP 3 735 835 A1

**Description**

The invention relates to a process to extract and/or isolate albumin proteins from sunflower seeds. The invention further relates to the products thus obtained.

The global demand for proteins is expected to rise at a fast pace in the coming years due to the world population growth. Plant-based proteins can help to satisfy this demand.

Oil seeds, such as sunflower seeds, are an important source of proteins having a good nutritional value. In particular, proteins contained in sunflower seeds are now widely used in the food industry as, for example, food additives or stabilisers, or as major nutritious components.

Sunflower (*Helianthus annuus* L.) is the fourth most important oilseed with production reaching the value over 47 million tons in 2016 (FAO Eurostat). The solid residue (meal) remaining after oil extraction process is a valuable source of proteins (30-50 % on dry matter basis).

Sunflower meals are generally prepared from a sunflower seed in which the sunflower seed undergoes the following steps: cleaning, drying, dehulling (shelling), crushing, flaking, cooking (optional) and mechanical pressing - usually through screw-presses (expellers) - to form, what is known in the art as, a « press(ed) cake » or « press(ed) meal », containing 15-20 % of oil. The press cake can then be extracted with a non-polar (hydrophobic) solvent - usually hexane - to remove or reduce residual oil from the sunflower press cake to form, what is known in the art as, a « defatted meal » or « solvent extracted meal ». When such an organic solvent is used the oil (or lipid) content remaining in the defatted meal is residual (*e.g.* ranging from 0.1 to 4 wt% by weight of the total defatted meal) (see for review Laisney *et al.,* 1996). Dehulling sunflower seeds has shown to be particularly effective to obtain a cake or meal with a higher level of proteins than non-dehulling seeds.

Sunflower proteins are extracted and purified as concentrates or isolates depending upon their degree of purity. Isolates must further meet a number of varied demands from the food industry in terms of solubility, exclusion of components seen as undesirable, such as phytic acid and chlorogenic acid, and organoleptic properties and, in particular, colour. These characteristics are linked, at least partially, to the processes used for their extraction. The major classes of proteins present in sunflower seeds are globular helianthinins (50-80 %) and sunflower albumins (SFAs) (25-35 %) (Gonzalez-Perez *et al.*, 2007; Wildermouth *et al.*, 2016; Kortt *et al.*, 1990; Mazhar *et al.*, 1998; Raymond *et al.*, 1995).

Helianthinins have an oligomeric structure of 300-350 kDa. The predominant hexameric structure (11S) consists of six subunits composed of $\alpha$ basic polypeptide and $\beta$ acidic polypeptide with a molecular weight of 21-27 kDa and 32-44 kDa, respectively. The isoelectric point (IP) of helianthinins is about pH 4-6 (Durante *et al.*, 1989; Gonzalez-Perez *et al.*, 2002).

Sunflower albumins (2S) are a polymorphic group of proteins constituted of a single basic polypeptide chain (10-18 kDa). Several individual forms of SFAs (8-13) have been identified including 2S albumin storage proteins (16 kDa) and methionine-rich 2S proteins (12 kDa). SFAs are basic proteins with an average isoelectric point (IP) of pH 8.8 (Gonzalez-Perez *et al.,* 2007).

Many reports describe sunflower protein isolate production processes. As for many other plant source proteins, the highest protein extraction yields are observed under alkaline conditions. According to preliminary study on sunflower proteins undertaken by Sosulski *et al.* (1969) their extractability at basic pH (in 0.2 % NaOH) could reach 90 %. Later works of Ordonez *et al.* (2001) and Gonzalez-Perez *et al.* (2002), demonstrate maximal protein extraction yields ranging 50-70 % at pH close to 10. In these conditions, both SFA and helianthinins are extracted. Nonetheless, at high pH values phenolic compounds, notably chlorogenic acids (1-4 % of the meal on dry matter basis) are largely co-solubilized. The basic pH is in favour of chlorogenic acid oxidation leading to phenol-protein covalent bonding (Wildermuth *et al.,* 2016; Ozdal *et al.,* 2013; Bongartz *et al.,* 2016). This yields protein isolates with a characteristic greenish colour that are unsuitable for food applications.

Different process approaches have been attempted in order to limit the protein-phenol interactions, while keeping a satisfying protein extraction yield. The first one was to use high ionic strength extraction phase to increase the protein recovery at pH around neutrality. Optimization of solid/liquid extraction process performed by Pickardt *et al.* (2009) and Ivanova *et al.* (2012) showed that pH around 6 and 1.6-2.1 mol.L$^{-1}$ NaCl allowed a satisfying extraction yield (50 % *vs* 20 % without salt) and resulted in light-coloured protein product. However, this huge amount of salt seems to be unreasonable for the food industry due to the cost of effluent treatments and the corrosive risk toward stainless steel. Some authors have tried to inhibit formation of green pigment by adding of reducing agent as $Na_2SO_3$, $NaHSO_3$ or ascorbic acid (Salgado *et al.,* 2012; Friedman *et al.,* 1996; Richard-Forget *et al.,* 1997; Kuijpers *et al.,* 2012). Nevertheless, this method leads to further greening upon alkaline pH or storage of protein products because of the presence of residual polyphenols (Wildermouth *et al.,* 2016; Yoruk *et al.,* 2003). Another approach was to carry out a polyphenol extraction with organic or organic-aqueous mixtures such as butanol (Saeed *et al.,* 1988), 60% (v/v) methanol (Malik *et al.,* 2017), 80% (v/v) methanol (Gonzalez-Perez *et al.,* 2002) or 95% (v/v) ethanol (Cater *et al.,* 1972). Although, this treatment following to alkaline extraction and purification conducts to obtain low-coloured protein isolates, important lost in low-molecular proteins has been previously reported (Rahma *et al.,* 1979). Furthermore, the use of organic solvents for food processing is more often questioned.

Consequently, the conventional strategy that consists in trying to maximise the overall protein extraction yield and minimize the green colour of protein isolates comes to a dead end. Moreover, it yields large amounts of solid residue having poor value because of low nitrogen content. Hence, an alternative process aimed at a more sustainable extraction of sunflower proteins should be considered.

Among the two principal protein fractions, only SFAs present completely-balanced amino acid profile and usually high amount of sulphur-containing amino acids (Kortt *et al.*, 1990 and 1991; Gonzalez-Perez *et al.*, 2007) in accordance to the requirement pattern of the WHO/FAO/UN. It is also well known, that SFAs exhibit interesting foaming and emulsifying properties (Gueguen *et al.*, 2016; Burnett *et al.*, 2002). The excellent nutritional value and technofunctional capacities make SFAs attractive for various food applications.

Selective extraction of albumins from oleaginous meals has been previously denoted upon acidic conditions (Gonzalez-Perez *et al.*, 2005; Nioi *et al.*, 2012). Prior reports (Nissar *et al.*, 2017; Kumar *et al.*, 2010; Cheryan *et al.*, 1980) agree about the efficient elimination of phytic acid from oleaginous meals under lower pH values.

It is therefore highly desirable to provide a high yield process to obtain a sunflower albumin isolate which process also leads to a value-added residual solid with high protein content.

Alternatively, or additionally it is also highly desirable to provide a sunflower albumin isolate with negligible or at least small amounts of chlorogenic acid and/or phytic acid.

Alternatively, or additionally it is also highly desirable to provide a sunflower albumin isolate having high solubilisation properties in water within a broad pH range and/or improved organoleptic properties.

Within the framework of their research the Inventors have performed a study on the impact of experimental conditions on solid/liquid extraction to find a suitable process for obtaining a sunflower albumin isolate from sunflower seed press cake.

The Inventors have now found solid/liquid extraction conditions which result in selective production of colorless SFAs isolates with low phenolic contamination and good SFA extraction yield ($\geq$60 %). In particular the Inventors have found that the combination of method steps which include, *inter alia*, an acidic protein extraction step with the use of small amount of NaCl, and a diafiltration step is useful to achieve such a result. Simultaneously, the optimal extraction condition allowed obtaining a helianthinin-rich solid residue with reduced amount of antinutritional phytate and other non-protein compounds.

Accordingly, the invention provides a process for producing a sunflower protein isolate, said process comprising the following steps:

(a) providing a sunflower seed press cake, preferably a sunflower seed cold press cake;
(b) mixing said sunflower seed press cake with an aqueous NaCl solution at a pH of about 3 to 4.5, in order to solubilize proteins present in said sunflower seed press cake and to thus obtain a solubilised protein solution, wherein said aqueous NaCl solution has a NaCl concentration ranging from 0.2 to 0.6 mol.L$^{-1}$;
(c) separating said solubilised protein solution from solids therein;
(d) subjecting said solubilised protein solution obtained in step c) to one or several membrane filtration(s) to obtain a protein isolate, and
(e) optionally drying said protein isolate to obtain a dry sunflower protein isolate.

The sunflower protein isolate obtainable or obtained by the process described therein is rich in sunflower albumins (SFAs); in particular it contains at least 70 wt%; preferably at least 85 wt%, more preferably at least 90 wt%, by weight of the total proteins.

Advantageously, the SFA extraction yield (= SFA content in the protein isolate / SFA content in sunflower seed press cake) according to the process of the present invention is at least 65 %, preferably at least 65 %, more preferably at least 70 %.

Advantageously, said process does not contain a step of precipitation of said protein after step (b) and prior to step (c).

Advantageously, said process does not contain a step of contacting an exogenous phytase enzyme with the solubilised protein solution.

As used herein the term "sunflower seed" refers to oil seed obtained from a plant of the genus *Helianthus* and particularly from the species *Helianthus annuus* L. and from any particular sub-species or variety of said species, including wild perennial, hybrids thereof together with mutant and genetically modified varieties.

According to a specific embodiment of step b), NaCl can be replaced by KCl or CaCl$_2$ or a mixture thereof, *i.e.*, a mixture of NaCl and KCl, or a mixture of NaCl and CaCl$_2$, or a mixture of KCl and CaCl$_2$, or a mixture of NaCl, KCl and CaCl$_2$.

Protein content is measured on dry matter by determining the nitrogen content using the Kjeldahl method (see the Examples, *infra*) and multiplying it by a conversion factor of 5.6 (*i.e.*, Nx5.6 conversion factor) determined for sunflower proteins as described by Defaix *et al.* (Defaix *et al.* 2019) and used by other authors; (Pickardt *et al.,* 2009, Ivanova *et al.,* 2012; Gonzalez *et al.,* 2005).

**Step (a)**

In the context of the invention the term "sunflower seed press cake" relates to sunflower seeds from which sunflower oil is partially extracted by mechanical pressing to form what is known in the art as a press(ed) cake or press(ed) meal, also known as "partially defatted/deoiled cake/meal". Processes for obtaining sunflower seed press cake are well known in the art (Laisney *et al.,* 1996). The sunflower seed press cake is not extracted by a non-polar solvent (such as hexane, pentane or a mixture thereof) to further remove oil from said sunflower seed press cake.

Advantageously, the sunflower seeds are first dehulled (decorticated), at least partially (*e.g.*, 80 wt% measured as raw material depletion), before being transformed into a sunflower seed press cake. The use of dehulled seeds has shown to be particularly effective to extract a high level of proteins.

Although, any sunflower seed press cake may be used, it is preferred to use a sunflower seed cold press cake. By "cold press" it is particularly meant that the sunflower seeds are not cooked prior to its passing through the press and the temperature of the sunflower seed during the pressing step is of 85 °C or less, preferably 75 °C or less, more preferably 70 °C or less, most preferably 60 °C or less, to form a sunflower seed cold press cake. Usually, proteins contained in a cold press cake are less denatured than those contained in a press cake which has undergone an oil extraction process wherein the temperature of the sunflower seeds has reached 86 °C or more.

The press cake can be grounded into particulates and sieved so that only the fraction of particulates smaller than 500 µm is used. Press cakes made of fractions smaller than 700 µm, or than 800 µm or less, and even smaller than 1 mm may also be considered in order to carry out the process of the invention.

The protein content of the sunflower seed press cake can be ranging from about 15 wt% to about 58 wt% of proteins, preferably from 28 wt% to 45 wt% and more preferably from 34 % to 45 wt% on dry matter basis the press cake.

The oil, or lipids, content of the sunflower seed press cake can be ranging from about 12 wt% to about 22 wt% of lipids (*e.g.*, about 15 %), on dry matter basis of the press cake.

The phytic acid content of the sunflower seed press cake can be superior to 4 wt% on dry matter basis of the press cake, usually it may range from 5 to 10 wt% on dry matter basis of the press cake.

The process of the present invention also encompasses a sunflower seed press cake which has been processed in order to extract other substances than its oil/lipids. For example, a sunflower seed press cake from which some proteins have already been extracted can be used according to a process of the invention.

**Step (b)**

The sunflower seed press cake, preferably the sunflower seed cold press cake, is mixed with an aqueous NaCl solution having a NaCl concentration ranging from 0.2 to 0.6 mol.L$^{-1}$ (M), at a pH ranging from 3 to 4.5, in order to solubilize proteins present in said sunflower seed press cake and to thus obtain a solubilised protein solution. The aqueous NaCl solution can be prepared by adding to an aqueous solution an aqueous solution of NaCl at 0.1-1.0 mol.L$^{-1}$.

This aqueous solution is a liquid able to extract water-soluble proteins and which is mainly or essentially constituted of water. As used herein the term "water" refers to any type of available water, such as tap water or drinking water. It may include a small proportion (*e.g.*, less than 15 wt%, 10 wt%, 5 wt%, 2 wt% or 1 wt% by weight of the total liquid) of at least one another component. Such another component can be naturally occurring in the water (such as various types of salts, metallic or otherwise such as KCl, CaCl$_2$) or added on purpose, in particular to adjust the pH and/or the ionic strength of the solution.

The ionic strength of the solubilised protein solution should be controlled and kept at a level ranging from 0.2 to 0.6 mol.L$^{-1}$. In a preferred embodiment, the NaCl ionic strength adjustment is carried out by the addition of an aqueous solution of NaCl at 0.1-1.0 mol.L$^{-1}$

The pH of the solution which contains the solubilised protein is adjusted to be acidic, that is from 3 to 4.5. In order to adjust the pH of the solubilised protein solution of step b) a component such as an acid is added. For example, this component can be a strong acid, such as hydrochloric acid, or a weak acid, such as citric acid, lactic acid or phosphoric acid. In a preferred embodiment, the pH adjustment is carried out by the addition of an aqueous solution of HCl at 1.0 mol.L$^{-1}$.

Advantageously, no other salts than NaCl are added and/or only NaCl is added to the water used to solubilise the proteins.

It is preferred not to use a solvent such as methanol, propanol, iso-propanol and/or tetrahydrofuran. In particular it is preferred that no organic solvent be used in the aqueous solvent used in step (b).

According to a more preferred embodiment of the invention said aqueous NaCl solution of step (b) has a NaCl concentration ranging from 0.2 to 0.3 mol.L$^{-1}$ and said pH is from 4.0 to 4.2, preferably said aqueous NaCl solution of step (b) has a NaCl concentration of 0.25 mol.L$^{-1}$ and said pH is of from 4.05 to 4.15, most preferably a pH of 4.1.

According to a preferred embodiment of the invention, said aqueous NaCl solution of step (b) has a NaCl concentration ranging from 0.3 to 0.6 mol.L$^{-1}$ and said pH is from 3.1 to 3.5, preferably said aqueous NaCl solution of step (b) has a NaCl concentration ranging from 0.4 to 0.5 mol.L$^{-1}$ and said pH is of about 3.2 to 3.4.

The sunflower seed press cake and the aqueous NaCl solution are mixed together using conventional method to form a slurry which contains dissolved proteins in solution, and may further contained a suspension of protein, oil and optionally fibers as well as antinutritional and phenolic compounds. The weight solid/liquid ratio (w/w) of the sunflower seed press cake/aqueous NaCl solution usually ranges from 1:5 to 1:20 (wt%), preferably 1:6 to 1:15 (wt%) and more preferably about 1:8 (wt%) or 1:10 (wt%).

The extraction or solubilisation of the proteins is usually carried out by stirring or agitating the slurry formed by the sunflower seed press cake and the aqueous NaCl solution for a time period ranging from 10 min to 120 min, preferably 30 min to 90 min (*e.g.*, around 60 min). The stirring speed can be ranging from 100 rpm to 800 rpm, for example from 150 rpm to 900 rpm, e.g., 600 $\pm$ 20 %.

The pH adjustment can be done either before and/or during stirring.

The temperature of the slurry is preferably room temperature (*i.e.*, 20 °C) or higher. In particular it may range from 40 to 70 °C, preferably from 50 to 60 °C (*e.g.*, around 55 °C).

According to a preferred embodiment, the extraction (*i.e.* solubilisation of the proteins) step is not carried out using a blanket of inert gases. More preferably no inert gases are used in the process of the invention.

**Step** (c)

Once step (b) is carried out, the liquid phase comprising the solubilised protein solution and the solid phase contained in the mixture (slurry) are separated. The means to carry out this separation are well known in the art and include centrifugation means, such as a decanter centrifuge, filtration means, pressing means, such a screw press, a filter press, a belt press, a French press, decantation means, and/or any other means that separates the slurry into a solid phase and a liquid phase. This separation may be performed using a centrifuge, for example at g-force ranging from 1 000 to 20 000 g, preferably from 12 000 to 18 000 g, for example about 15 000 g. As the skilled person will directly understand the solid phase contains a small proportion of liquid and conversely the liquid phase will comprise a small proportion of solids or solid particles.

In a particular embodiment of the invention the liquid phase containing residual solids is further subjected to another separation step using for example at least one disk stack centrifuge. The g-force of this centrifugation may be ranging from 6 000 to 20 000 g, for example 17 000 g.

The spent solids, containing helianthinin proteins, can either be disregarded or recovered for further use, optionally after a drying step.

In an optional particular embodiment of the invention, the spent solids obtained from step (c) described above is further subjected to a mixing with an aqueous NaCl solution at a pH ranging from 3 to 4.5, in order to further solubilize proteins present in said solids and to thus obtain a further solubilised protein solution, wherein said aqueous NaCl solution has a NaCl concentration ranging from 0.2 to 0.6 mol.L$^{-1}$, as decribed above. The liquid phase containing the solubilised protein solution is then separated from the slurry in suspension as described above. The second solubilised protein solution enriched in protein can be pooled with the first solubilised protein solution enriched in protein. The pooled solution enriched in protein is then subjected to one or several membrane filtration(s).

**Step (d)**

The recovered solubilised protein solution, enriched in protein, is subjected to diafiltration steps, and preferably some preliminary purification steps such as filtration, microfiltration, or ultrafiltration, preferably ultrafiltration, to recover a purified protein solution.

Means to carry out membrane filtration are well known in the art.

According to an embodiment, the solubilised protein solution can be subjected to one or more microfiltration step(s). Such a microfiltration may be performed by using filtration membrane having a nominal pore size ranging from 0.1 $\mu$m to 2 $\mu$m, preferably from 0.1 $\mu$m to 1 $\mu$m (*e.g.* 0.1 $\mu$m). Microfiltration may, as it is usual, comprise one or more diafiltration step with non-salt water (*e.g.*, tap water) or an aqueous solution of salt, for example NaCl or CaCl$_2$, preferably NaCl at a suitable concentration. Such salt concentration may be ranging from 0.05 mol.L$^{-1}$ to 1 mol.L$^{-1}$, preferably from 0.4 mol.L$^{-1}$ to 0.6 mol.L$^{-1}$. Furthermore, the pH may advantageously be controlled and/or adjusted, for some or all the filtration and/or the diafiltration steps. In order to adjust the pH a pH modifier, such as an acid or a base, can be added, e.g., phosphoric acid, to the water.

The collected permeate from the microfiltration step may be concentrated prior or after diafiltration step using, for example, an ultrafiltration (UF) membrane system. The level of concentration chosen can be achieved applying a VRF of 1 to 20 of the solubilised protein solution but is advantageously ranging from 2 to 8. Hence the concentration can be carried out by a VRF of 2, 3, 4, 5, 6, 7, 8, 9 or 10.

According to another embodiment, the solubilised protein solution can be subjected to one or more diafiltration step(s). Advantageously, the solubilised protein solution can be concentrated prior or after the diafiltration step(s). The level of concentration of the solubilised protein solution can achieve a volumetric reduction factor (VRF = [volume of the feed]/[volume of the retentate]) of 2 to 20 of the solubilised protein solution, but is advantageously ranging from 5 to 10, e.g., 8. The collected permeate from this microfiltration step is then subjected to the ultrafiltration step described subsequently.

According to another embodiment, the solubilised protein solution can be subjected to one or more ultrafiltration step(s). The ultrafiltration is preferably carried out using a filtering device made of a suitable material such as regenerated cellulose, a polysulfone (PS) or a polyethersulfone (PES) which has low protein retention. The molecular weight cut-off (MWCO) of the filter material may ranges from 1 kDa to 20 kDa, preferably from 1 to 10, most preferably from 1 to 5 kDa. Ultrafiltration may, as it is usual, comprise one or more subsequent concentration step or diafiltration step or combination of both.

This retentate is then diafiltrated. At least one and preferably more than one (e.g., 2 or 3) dialfiltration step can be carried out. This dialfiltration step can be carried out using non-salt water or an aqueous solution of salt, for example NaCl or $CaCl_2$ at a suitable concentration. Such concentration may be ranging from 0.05 $mol.L^{-1}$ to 1 $mol.L^{-1}$, preferably from 0.4 $mol.L^{-1}$ to 0.6 $mol.L^{-1}$. The diafiltration step with salt water can be carried out after an ultrafiltration step which is carried out with water (and not salt water), possibly at an elevated temperature (e.g. 55 °C).

Once the NaCl diafiltration, and eventually the pH adjustment, is carried out, a further diafiltration step(s) can be carried out on the retentate obtained from the described NaCl diafiltration step with water. The water used can be tap water but is advantageously purified by removing organic/inorganic particles and contaminants and eventually dissolved gases. The retentate can be washed using preferably 1 to 10 DV of cold or hot water, preferably more than 1 DV, such as 2, 3, 4, 5, or 6 DV, or more.

In a particular embodiment of the process of the invention, step d) comprises the following step: subjecting the permeate of step c) to at least one ultrafiltration step, optionally followed by at least one diafiltration step, and harvesting the sunflower protein isolate.

It is also possible to precipitate the solubilised protein by adding ammonium sulfate as a kosmotropic agent, for example at a concentration of 5 $mol.L^{-1}$ or 6 $mol.L^{-1}$. Doing so, the amount of water available for protein solvation dramatically decreases resulting in selective protein precipitations. Therefore, in another particular embodiment, of the process of the invention, step d) comprises the following steps:

(d1) subjecting the solubilised protein solution obtained in step c) to at least one microfiltration step and harvesting a permeate, preferably wherein the solubilised protein solution obtained in step c) is concentrated by a volumetric factor of 8 and then the retentate is washed with 2 diafiltration volumes of 0.5 $mol.L^{-1}$ NaCl,

(d2) adding ammonium sulfate to the permeate of step d1) to form a mixture, for example up to up to 65 % of saturation,

(d3) centrifugation of the mixture (*e.g.*, 15 000 x g for 30 min at 20 °C) and collecting the pellet,

(d4) dissolving the pellet of step d3 in water, preferably deionized water, to obtained an protein solution,

(d5) subjecting the protein solution obtained in step d4) to a low pressure chromatography system and eluting the protein with deionized water, and

(d6) collecting the protein solution peak recorded at 280 nm and less than 1 % of conductivity.

Additionally, or alternatively, a pasteurising step can further be carried out before that the dia-ultrafiltration with water or salt water takes place. Such a pasteurising step can take place at 75 °C for 15 minutes. In a preferred embodiment the temperature can also be elevated either slightly (*e.g.*, around 30 °C) or more positively (*e.g.*, around 55 °C).

According to another embodiment of the invention the steps from step b) to step d) are carried out at ambient temperature or at an elevated temperature such as 55 °C but less than 85 °C.

**Step (e)**

In order to obtain an isolate and to preserve the structure of the sunflower protein thus isolated by the process of the invention, it is advantageous to freeze dry, lyophilized or to spray dry the purified protein solution in order to obtain a dry powder. These techniques are well known in the art. For instance, to freeze dry, the purified protein isolate is frozen at temperature from -80 °C to -20 °C until complete freezing. Then freeze-drying is carried out by the use of a standard freeze-dried apparatus at a sublimation temperature around - 20 °C. To spray dry, it is customary to use a standard vertical spray dryer equipped with nozzle, with an inlet temperature ranging from 150 °C to 200 °C and an outlet temperature ranging from 70 to 90 °C. These methods permit to obtain a powder having less than 7 wt% of water, and preferentially less than 4 to 6 wt%.

The process of the invention further encompasses a process wherein any one of steps above described may be repeated, eventually more than once.

**Sunflower seed protein isolate**

The invention also provides a sunflower seed protein isolate obtainable or obtained by the process of the invention.

The sunflower seed protein isolate of the invention is preferably a native protein isolate having a protein content of at least 88 wt% by weight of the total dry matter (/dm), usually at least 90 wt%/dm and more advantageously at least 93 wt%/dm. Protein content is measured on dry matter by determining the nitrogen content using the Kjeldahl method (see the Examples, *infra*) and multiplying it by a conversion factor of 5.6 *(i.e.,* Nx5.6 conversion factor) determined for sunflower proteins as described by Defaix *et al.* (Defaix *et al.,* 2019; Pickardt *et al.,* 2009).

Albumin proteins are identified by a molecular weight of 10-18 kDa measured by SDS-PAGE method (see the Examples, *infra).* According to a particular embodiment of the invention, the sunflower seed protein isolate obtainable or obtained by the process of the invention has an albumin protein content of at least 85 wt%, preferably at least 90 wt%, by weight of the total proteins.

Phytic acid content is determined by a method adapted from that described by Garcia-Estepa *et al.* (1999) (see the Examples, *infra).* According to another particular embodiment of the invention, the sunflower seed protein isolate obtainable or obtained by the process of the invention has less 4 wt%/dm, and by order of preference less than 3 wt%/dm, 2 wt%/dm and 1 wt%/dm of phytic acid.

Chlorogenic acid compounds are a major cause of the dark colour and undesirable taste of sunflower seed protein isolates. In sunflower seed, these compounds are mainly three isomeric forms of chlorogenic acid 3-CQA, 4-CQA and 5-CQA. According to another particular embodiment of the invention, the sunflower seed protein isolate contains no or negligible amount of any or all of such compounds and a method of obtaining it. A negligible amount of a chlorogenic acid compound can be an amount equal or inferior to 1 %, preferably equal or inferior to 0.5 %, advantageously equal or inferior to 0.2 %, using the measuring method described herein below. Hence, a further object of the invention is a sunflower seed protein isolate obtainable or obtained by the process of the invention having a content of at least one chlorogenic acid isomer of at most 0.2 wt% by weight of the total proteins in said isolate. Preferably, the isolate has less than 0.2 wt% of all chlorogenic acids isomers, aka 'chlorogenic acid' by weight of the total proteins in said isolate.

The invention also provides a sunflower seed protein isolate obtainable or obtained by the process of the invention, wherein in step (b) describe above, said aqueous NaCl solution has a NaCl concentration ranging from 0.2 to 0.3 mol.L$^{-1}$ and said pH is from 4.0 to 4.2, preferably said aqueous NaCl solution of step (b) has a NaCl concentration of 0.25 mol.L$^{-1}$ and said pH is of from 4.05 to 4.15. According to this embodiment, the sunflower seed protein isolate has at least one, preferably all the following features:

i. a total protein content of at least 90 wt% by weight of the total dry matter, preferably at least 93 wt%/dm,

ii. an albumin (protein) content of at least 85 wt%, preferably at least 90 wt%, by weight of the total proteins,

iii. a phytic acid content of less than 1 %/dm, preferably less than 0.9 wt%/dm,

iv. no detectable free *(i.e.,* not bound to proteins) chlorogenic acid monoisomers, namely 3-caffeoylquinic acid (3-CQA), 5-caffeoylquinic acid (5-CQA) and 4-caffeoylquinic acid (4-CQA), using a SE-HPLC (Size Exclusion - High-Performance Liquid Chromatography) method, preferably the method described in the Examples below,

v. colour (almost white) defined by the following coordinates L\*=92.2 $\pm$ 2.9, a\*=1.3 $\pm$ 0.7, b\*=11.0 $\pm$ 1.4, wherein L\* represents the lightness, the a\* axis represents the green-red component, with green in the negative direction and red in the positive direction and wherein the *b\** axis represents the blue-yellow component, with blue in the negative direction and yellow in the positive direction; these coordinates being measured by the method described in the Examples (see *infra);* Advantageously, $\Delta$E = 15 or less, and by order of increasing preference, 10 or less, 5 or less,,

vi. a solubility of at least 95 %, preferably at least 98 %, more preferably at least 99 % in an aqueous solution at a pH ranging from 2 to 11; the solubility being measured by the method described in the Examples (see *infra),*

vii. a cysteine content ranging from 30,5 to 49 mg.g$^{-1}$, preferably ranging from 33.7 to 44.7 mg.g$^{-1}$ of total protein in said protein isolate; the amino acid content being measured by the method described in the Examples (see *infra),*

viii. a methionine content ranging from 26,5 to 43 mg.g$^{-1}$, preferably ranging from 29.2 to 38.9 mg.g$^{-1}$ of total protein in said protein isolate; the amino acid content being measured by the method described in the Examples (see *infra),*

ix. an amino acid content as defined in Table 4, below.

In a preferred embodiment, the sunflower seed protein isolate has the features i, ii, iii, iv and v as defined above, more preferably the features i, ii, iii, iv, v and vi as defined above, and most preferably the features i, ii, iii, iv, v, vi, vii and viii as defined above.

**Sunflower seed protein composition**

The invention also provide a sunflower seed protein composition (solids) obtainable or obtained by the process after step (c) and before step d) described therein. This sunflower seed protein composition is rich in proteins.

The sunflower seed protein composition (solids) of the invention is preferably a native protein composition having a protein content of at least 35 wt% by weight of the total dry matter (/dm), advantageously at least 40 wt%/dm. Protein content is measured on dry matter by determining the nitrogen content using the Kjeldahl method (see the Examples, *infra*) and multiplying it by a conversion factor of 5.6 *(i.e.,* Nx5.6 conversion factor) determined for sunflower proteins as described by Defaix *et al.* (Defaix *et al.,* 2019; Pickardt *et al.,* 2009).

According to a particular embodiment of the invention, the sunflower seed protein composition (solids) of the invention has less 4 wt%/dm, and preferably less than 3.8 wt%/dm, of phytic acid.

**Use**

The invention also provides the use of the sunflower seed protein isolate as described therein in the food industry, for example as a main component, a supplement or an additive. Hence the protein isolate of the invention can be used according to the invention in food product or food ingredient, preferably for beverages, such as acidic beverage with a pH value less than 6, preferably less than 3.5, neutral beverage with a pH value comprised between 6 and 8 or basic beverage, with a pH value more than 8.

The invention also provides a food or beverage comprising a sunflower seed protein isolate of the invention, a method of making a foodstuff, or a food supplement, by adding and/or mixing said protein isolate to other ingredients. In a particular embodiment, the invention provides a drink (including a soft drink), particularly a coffee or a chocolate preparation including a whitener or not, comprising at least 1 wt% of the sunflower seed protein isolate according to the present invention. In another particular embodiment, the invention provides a nutritional composition, such as a milk product (for example a yogurt) comprising at least 1 wt% of the sunflower seed protein isolate of the invention.

The invention also provides the use of the sunflower seed protein composition (solids) obtainable or obtained by the process after step (c) and before step (d) described therein as feed, dietary supplement or additive, for animal feeding.

Foregoing and other objects and advantages of the invention will become more apparent from the following detailed description and accompanying drawing, which refers to non-limiting examples illustrating the process according to the invention.

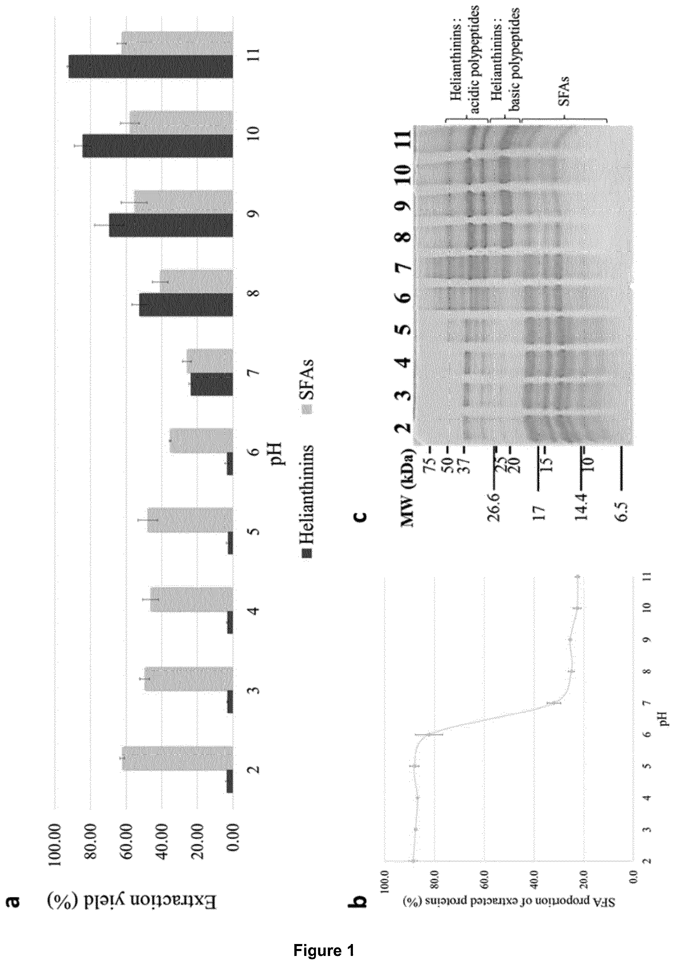

**Figure 1** shows the influence of pH (2-11) on extraction of sunflower proteins. In Fig. 1a, for each pH value, the extraction yield of helianthinins and sunflower albumins (SFAs) is represented by the left and right bars, respectively. The composition of extracted sunflower proteins analyzed by SE-HPLC or visualized by reducing SDS-PAGE was illustrated in Fig 1b and 1c, respectively.

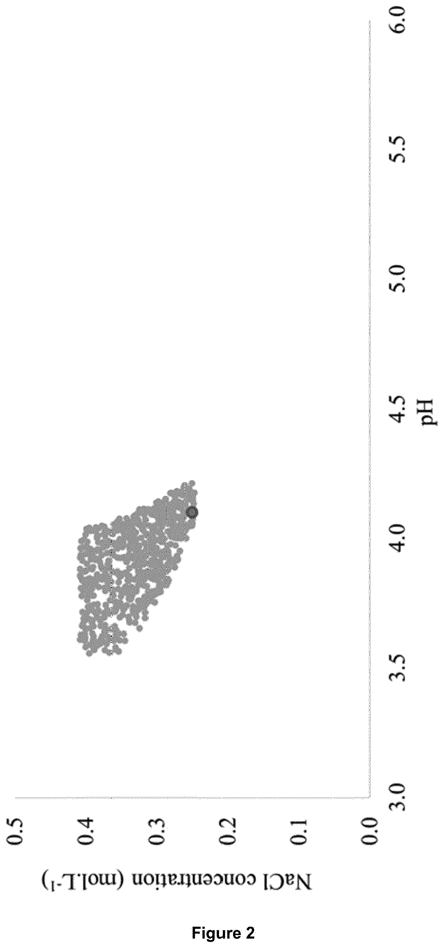

**Figure 2** shows the non-dominated responses (grey points) of multi-objective optimization of solid/liquid extraction taking into consideration SFA extraction yield ($SFA_{YIELD}$>70 %), SFA content ($C_{SFA}$>90 %), SFA phenolic contamination ($SFA_{PHEN}$<1.6 mg CQA *per* gram of SFAs) in aqueous extract and phytate ($C_{PHYT}$<4 %), protein ($C_{PROT}$>40 %) content in solid residue. Bold-framed point correspond to the optimal condition selected for solid/liquid extraction.

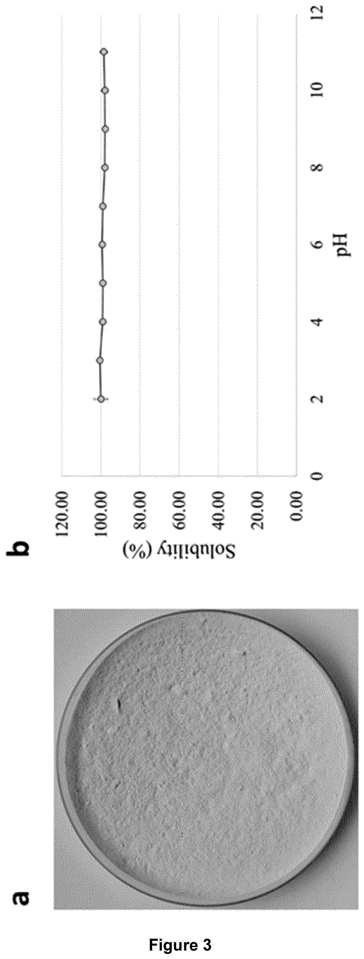

**Figure 3** shows properties of sunflower albumin isolate extracted in optimum of conditions. In Fig. 3a the color and in Fig. 3b the solubility of produced isolate as a function of pH from 2 to 11.

## EXAMPLES

### Example 1: Sunflower albumin extraction

#### 1. Materials and Methods

##### 1.1. Chemicals

Sodium chloride (NaCl, CAS 7647-14-201), sodium hydroxide pellets (NaOH, CAS 1310-73-2) ethylenediaminetetraacetic acid (EDTA, CAS 6381-92-6) were obtained from VWR (Darmstadt, Germany). Hydrochloric acid (HCl, CAS 7647-01-0) was from Carlo Erba (Milan, Italy). Tris(hydroxymethyl)aminomethane (Tris, CAS 77-86-1), glycine (CAS 56-40-6), iron (III) chloride (FeCl3, CAS 7705-08-0), sodium sulfate (Na2SO4, CAS 7757-82-6), 5-sulfosalicylic acid hydrate (CAS 304851-84-1) was from Fisher Scientific (Hampton, USA).

**1.2. Solid/liquid extraction**

Sunflower cold press meal (or cake) was provided by Olead (Pessac, France). The protein, fat and phytic acid content in the meal were 42.8, 14.6, and 6.6 % on dry matter basis, respectively. The meal was extracted with 1:9 solid/liquid ratio (w/w). The pH (3-6) and various concentrations of NaCl solutions (0-0.5 mol.L$^{-1}$) were used according to the DoE matrix. The mixture was stirred at 600 rpm during 60 min at 20 °C. If necessary, the pH was readjusted. Then, the slurry was centrifuged (15 000×g, 30 min, 20 °C) and partly clarified on a Whatman filter paper. About 1600 mL of aqueous extract was obtained. The remaining solid residue was collected, stored at -80 °C and freeze dried.

**1.3. Experimental design and process optimization**

The design of experiment (DoE) and statistical analysis were based on response surface methodology (RSM). The influence of two factors: pH (3-6) and NaCl concentration (0-0.5 mol.L$^{-1}$) on three responses: extraction yield (SFA$_{YIELD}$%), content (C$_{SFA}$%) and phenolic contamination (SFA$_{PHEN}$ mg.g$^{-1}$) of albumins in liquid extract, as well as acid phytic (C$_{PHYT}$%) and protein (C$_{PROT}$%) content in remaining solid residue were taking into consideration. For design of experiments Modde 9.1.1.0 software form Sartorius Stedim Biotech (Gottingen, Germany) was used. According to generated experimental matrix, 11 experiments were performed containing three replications at the central point. The response surface curve, polynomial equation and observed/predicted plots were achieved. The mathematical relationship between factors and response was described by second-degree polynomial equation as follow:

$$y = \beta_0 + \beta_1 x_1 + \beta_2 x_2 + \beta_{11} x_1^2 + \beta_{22} x_2^2 + \beta_{12} x_1 x_2$$

were:

y      - response,

$\beta_0$      - constant,

$\beta_1$      - coefficient of linear effect of pH,

$\beta_2$      - coefficient of linear effect of NaCl concentration,

$\beta_{11}$      - coefficient of cubic effect of pH,

$\beta_{22}$      - coefficient of cubic effect of NaCl concentration,

$\beta_{12}$      - coefficient of interactive effect of pH and NaCl concentration,

$x_1$      - uncoded pH value,

$x_2$      - uncoded NaCl concentration value.

The obtained equations were statistically verified by evaluation of regression coefficient (R$^2$), residual standard deviation (RSD) and analyse of variance test (p-value, lack of fit). The significance level of p=0.05 was claimed.

**1.4. Multi-objective optimization**

The multi-objective optimization of extraction process was carried out with using the predictive equations of RSM. The genetic-evolutionary algorithms were employed to identify the optimum of experimental parameters in term of pH and NaCl concentration. The non-dominated solutions were calculated including the set of constraints: SFA$_{YIELD}$>70 %, C$_{SFA}$>90 %, SFA$_{PHEN}$<1.6 mg.g$^{-1}$%, C$_{PHYT}$<4 % and C$_{PROT}$>40 %. The selected optimal conditions were validated on additional experimental batch extraction by comparing the observed responses with prediction intervals of models (PI) and calculation of standard error (SE). The optimization runs (n=2 000) and all data exploitation were carried out using MATLAB software from MathWorks (Natick, USA).

**1.5. Protein purification**

Protein purification was performed in three principal stages: extract clarification by microfiltration, protein precipitation from extract using ammonium sulfate and protein desalting by size exclusion chromatography. The microfiltration step was carried out on Akta system from GE Healthcare (Illinois, USA) using Hydrosart membrane system (0.2 μm 200 cm$^2$) from Sartorius (Gottingen, Germany). The 4 L of collected liquid extract was concentrated by a volumetric factor of 8 and then the retentate was washed with 2 diafiltration volumes of 0.5 mol.L$^{-1}$ NaCl. The total microfiltration permeates were pooled for next step. Ammonium sulfate was added to microfiltration permeates up to 65 % of saturation and stirred for 30 min at a room temperature. After protein precipitation and centrifugation step (15 000×g for 30 min at 20 °C) obtained pellet was dissolved in 750 mL of deionized water. The desalting of proteins was carried out on low pressure chromatography system of Akta Pure from GE Healthcare (Illinois, USA). The sample volume of 20 % bed volume of column (10 cm of height, 5 cm of diameter) was injected into G-25 Fine silica gel (GE Healthcare, Illinois, USA). The elution was performed at 10 mL.min$^{-1}$ with deionized water and the peak corresponding to protein recorded at 280 nm and less than 1 % of conductivity was collected and freeze-dried.

**1.6. Analytical methods**

**1.6.1. Protein characterization by gel electrophoresis**

Sodium dodecyl sulfate polyacrylamide gel electrophoresis (SDS-PAGE) was performed according to Leammli method (Laemmli *et al.,* 1970). Sunflower aqueous extract was diluted in 0.1 mol.L$^{-1}$ of sodium phosphate buffer at pH 7 to obtain a final concentration of 2 g.L$^{-1}$. Then, the sample was solubilized in 50 μL of Laemmli buffer containing 2 % β-mercaptoethanol (v/v) and heated at 95 °C for 5 min. Molecular weight markers ranging 250-10 kDa (Precision Plus Protein Standards) and 26.6-6.5 kDa (Polypeptide SDS-PAGE Standard) were used (Bio-Rad, Hercules, USA). 10 μL of sample and markers were deposed to a 5 % of polyacrylamide stacking gel and separated in a 17 % polyacrylamide resolving gels. The migration step was carried out at 20 mA per gel. The gels were subsequently stained with Coomassie Brilliant Blue and destained overnight in 10 % acetic acid solution (v/v).

**1.6.2. Determination of albumin and globulin content by SE-HPLC**

SE-HPLC analysis was performed according to the method of Defaix *et al.* (Defaix 2019). The analyses were carried out on HPLC Shimadzu LC30 system coupled with photodiode array (PDA) detector and operated by LabSolutions software, all from Shimadzu Corporation (Kyoto, Japan). 5-20 μL of sample was injected onto a Biosep SEC s-2000 column (300 x 7.8 mm; 5 μm) from Phenomenex (Torrance, USA). The exclusion rang of molecular weight was comprise from 1 to 300 kDa. During analysis the autosampler and column compartment were maintained at 20 and at 35 °C, respectively. The mobile phase consisted in acetonitrile/water/trifluoracetic acid (45:54.9:0.1 v/v). The elution flow rate was set at 0.6 mL.min$^{-1}$. All solvents were HPLC grade and were supplied from Fisher Scientific (Hampton, USA). The ultrapure water (H$_2$0) with resistivity≥18.2 MΩ.cm$^{-1}$ was used. The PDA signal was recorded between 190 and 400 nm with maximal absorption at 214 or 280 nm for protein or 325 nm for phenolic compound detection. To determine globulin and albumin proportion in sunflower aqueous extract the meal globulin/albumin ratio (70:30) was considered. This ratio corresponds to the mean value denoted in several articles (Mazhar et al., 1998; Baudet et al., 1977; Raymond et al., 1995). All measurements were performed in triplicate and the average value was calculated. All measurements were performed in triplicate and the average value was calculated.

**1.6.3. Determination of soluble proteins, free chlorogenic acid isomers and chlorogenic acid bound**

Sunflower protein and free chlorogenic acid isomer (3-CQA, 5-CQA et 4-CQA) content were determined using the SE-HPLC method of Albe Slabi *et al.* (Albe Slabi, 2019). The same HPLC system and chromatographic as presented in section 1.6.2 was used except for mobile phase composition (acetonitrile/water/formic acid (10:89.9:0.1 v/v)). The amount of covalently fixed CQAs (milligram of CQAs bound *per* one gram of SFAs) were quantified considering the surface of peak at 325 nm eluted at the retention time of SFAs and the average calibration slop of 3-CQA, 5-CQA et 4-CQA. The mass of soluble SFAs in liquid extract was determined basing on the concentration of total sunflower proteins and the proportion of SFA fraction in aqueous extract (section 1.6.2.). In the calculations, the same value of molar attenuation coefficient for helianthinins and SFAs was assumed, as it has been confirmed by Defaix et *al.* (Defaix, 2019). All analysis was carried out in triplicate and an average value was calculated.

**1.6.4. Kjeldahl method**

The measure of total nitrogen content in sample was carried out in accordance to Kjeldahl method procedures described in AOAC method 991.20 (AOAC). 0.5-2 mL of sample was mineralized in a digestion flask with 4 mL of 96 % $H_2SO_4$ (v/v) and approximately 10 mg of catalyst. The mineralization step was achieved at 450 °C during 150 min. After this time, the solution was distilled with 32 % NaOH (w/v) and the mixture was titrated against 0.01 mol.L$^{-1}$ HCl. A blank consisted of non-protein containing sample. The non-protein nitrogen in sample was determined in supernatant after protein precipitation using 50 % trichloroacetic acid (w/v). A nitrogen to protein conversion Nx5.6 was used. All analyzes were repeated in triplicate. Average values of concentration and standard deviation were calculated.

**1.6.5. Quantification of phytic acid**

Phytic acid determination was adapted from the method described by Garcia-Estepa *et al.* (Garcia-Estepa *et al.*, 1999): 250-300 mg of solid sample was stirred with 20 mL of 0.4 mol.L$^{-1}$ HCl/10 % Na2SO4 (w/v) for about 120 min at room temperature. The blank consisted of deionized water. Then, the mixture was centrifuged (10 000×g, 30 min, 20 °C) and supernatant was additionally clarified using 0.22 µm filter. In centrifuge tube 2.5 mL of 20 mmol.L$^{-1}$ FeCl$_3$, 0.4 mol.L$^{-1}$ HCl/10 % Na2SO4 (w/v), 20 % sulfosalicylic acid (w/v) and filtered supernatant were mixed and heated at 100 °C for 20 min. After cooling at room temperature, the sample was centrifuged (10 000×g, 30 min, 20 °C) filtered (0.22 µm) and transferred into 50 mL volumetric flask. The pellet was washed with 4 mL of deionized water, centrifuged (10 000×g, 10 min, 20 °C) and supernatant was added after filtration (0.22 µm) into 50 mL volumetric flask. This step was repeated in triplicate. The volumetric flask was completed with deionized water. The pH of 20 mL of obtained solution was adjusted to 2.5±0.5 using glycine. After heating to 70-80 °C the sample was tittered against 2 mmol.L$^{-1}$ EDTA solution. The equivalent volume was reached when the solution changes color from burgundy to yellow-green. The results were expressed as phytic acid content on dry matter basis of sunflower meal (Ac Phyt/dm%). All measurements were performed in triplicate and average value was calculated.

**1.6.6. SFA solubility**

The SFA isolate was suspended in deionized water at 5.0 g.L$^{-1}$ (room temperature). The pH was adjusted to a given value by adding either 0.1 mol.L$^{-1}$ NaOH or 0.1 mol.L$^{-1}$ HCl and kept constant during 30 min. Then, the slurries were centrifuged (15 000×g, 20 min, 20 °C). The protein concentration in supernatant was measured by SE-HPLC according to Albe Slabi *et al.* (Albe Slabi *et al.,* 2019). All analyzes were repeated in triplicate and average value of concentration and standard deviation were calculated.

**1.6.7. Colour measurement**

The solution of protein powder in deionized water was prepared at a concentration of 1 % (w/v) and clarified thought 0.22 µm membrane filter. The color was recorded in CieL*a*b* scale using Lovibond PFX195 Tintometer at room temperature. The measure was performed in ten repetitions and average value of L*, a*, b* parameters with standard deviation were calculated.

**1.6.8. Amino acid composition**

The determination of amino acid content (except tryptophan) was performed according ISO 13903:2005 procedures. Generally, protein sample (10 mg) was first hydrolysed using hydrolysis mixture solution and the hydrolysate was injected into C18 column of HPLC system. Composition in amino acids was determined by reaction with ninhydrin using photometric detection at 570 nm or 470 nm (for proline). For tryptophan quantification (EU 152/2009) sample was hydrolysed with barium hydroxide solution at 110 °C for 20 h and then injected into C18 column of HPLC system coupled with fluorescence detector (excitation 280 nm, emission 356 nm).

**1.6.9. SFA structure study**

SFA proteins were analysed by Dynamic Light Scattering (DLS), Circular Dichroism (CD) and Differential Scanning Calorimetry (DSC). DLS measurement was recorded on Zeta Sizer Nano-S from Malvern Instruments (Worcestershire, UK). 20 µL of filtered (0.22 µm) SFA solution at a concentration of 1 g.L$^{-1}$ at pH 4 (10 mM sodium phosphate buffer), pH 7 (10 mM sodium phosphate buffer) and pH 9 (10 mM borate buffer) were used. Samples were maintained at 25 °C during measurement. The number of acquisitions varied between 13 and 17 scans. Volumetric distribution of particle size was determined.

Circular dichroism (CD) was carried out using a Chirascan Plus device from Applied Photophysics (Leatherhead, UK). The far-UV spectra were obtained in the UV region of 180-280 nm. CD spectrophotometer was kept under constant flow of nitrogen gas and the temperature was maintained at 20 °C. Samples were prepared in the same way as for DLS analysis and blank assay corresponding to appropriate buffer solution was subtracted. All spectra were repeated at least in triplicate and mean measurement was calculated. The far-UV spectra were converted into mean residue ellipticity $[\theta_{MRE}]$ using the number of amino acids set at 130. The content of $\alpha$-helix, $\beta$-sheet structures and random coils were obtained after spectrum deconvolution using CDNN software version 2.1.

DSC determination was carried out by Microcal VP-DSC from Malvern Panalytical (Worcestershire, UK) using the SFA solution at a concentration of 2 g.L$^{-1}$ in 10 mM sodium phosphate buffer, pH 7. The solution was filtered (0.22 $\mu$m) prior analysis. The blank assay consisted on protein-free phosphate buffer. Thermogram was acquired over a temperature range from 20 to 130 °C at the rate of 1 °C/min. Thermal properties of SFA were expressed as the temperature of denaturation ($T_m$) and the enthalpy calorimetry $\Delta H_{cal}$, that represents the total amount of energy emitted during the denaturation process.

## 1.6.10. Functional properties of SFA isolate

For foaming study, 20 mL of 1 % (w/v) SFA isolate solution in 10 mM sodium phosphate buffer pH 7 was mixed at 10 000 rpm during 5 min at room temperature using Ultra-Turrax T25 digital homogenizer from IKA (Staufen im Breisgau, Germany). Foaming capacity was calculated as ratio (in %) foam volume (mL) in to initial volume of SFA solution (mL). The foaming stability was expressed as the percentage of remaining foam volume (mL) after 5, 15, 30, 60 and 120 min.

The emulsifying capacity were evaluated using 5 % (w/v) SFA isolate solution in 10 mM sodium phosphate buffer pH 7. For this purpose, 5 mL of above mentioned SFA solution was mixed with 2.5 mL of sunflower oil and mixed by Ultra-turax Homogenizer at 10 000 rpm at room temperature during 30 s. After this time, 2.5 mL of sunflower oil was additionally mixed at the same speed during 90 s. The mixture was then centrifuged at 1 100xg during 5 min. The ratio (in %) of emulsion volume (mL) after centrifugation and initial volume of mixture (mL) represents the emulsifying capacity. The stability of emulsion was determined after heating at 85 °C during 15 min and additional centrifugation (the same parameters). It represents the ratio (in %) of emulsion volume (mL) after and before heating. All measurement of technofunctional properties were carried out in triplicate and average value with standard deviation were calculated. The technofunctional properties of soy proteins (Solae, St. Louis, USA) measured in the same way as those of SFAs were used as a reference.

## 2. Results

## 2.1. Effect of pH on sunflower proteins extraction

The trial study aimed at selecting the pH range that allows selective extraction of SFAs. For this purpose, the influence of pH (3-7) on extraction of helianthinins and SFAs was investigated (Fig. 1).

The graph in Fig. 1a presents the modification in extraction yield of helianthinins and SFAs under studied pH domain. Under acidic conditions (pH 3-6) helianthinins are poorly extracted (around 3 %), while their extraction yield increases significantly at pH 7 (23.64 $\pm$ 0.90 %).

Besides, albumins (SFAs) extraction was high (around 50 %) under strong acidic conditions (pH 3-5). It started to decrease at pH 6 to reach a minimum at pH 7 (25.87 $\pm$ 2.38 %).

The graph in Fig. 1b shows the proportion of soluble SFAs in relation to total sunflower proteins determined in aqueous extract by SE-HPLC (Defaix et al., 2019). The SFA proportion in liquid phase dominants significantly at pH 3-5 (>85 %), while it decreases dramatically at pH 7 (about 30 %). The protein composition was additionally evaluated by reducing SDS-PAGE gels (Fig. 1c). The results confirm that under acidic conditions (pH 3-5) the bands between 10-18 kDa corresponding to SFA molar weight was extracted. Interestingly, the gel reveals also the globulin acidic polypeptide (26.6-37 kDa) accounting probably for approximatively 15 % of helianthinins co-solubilized under acidic conditions. Apparently, this polypeptide is not destructured enough at low pH to form irreversible aggregates with other helianthinins subunits.

The SFAs extraction yield under acidic condition was only around 50 %. The effect of NaCl was also investigated. To assess a synergetic effect between NaCl and pH, a design of experiments (DoE) study was implemented. Beside SFAs extraction yield, SFAs composition and polyphenol content in the liquid phase was investigated.

## 2.2. Effect of pH and NaCl on SFA yield, content and phenolic contamination during acidic extraction

The effect of the pH ($x_1$) (3-6) and mild NaCl concentration ($x_2$) (0-0.5 mol.L$^{-1}$) on SFA extraction was studied by DoE. Responses related to the liquid extract and the solid residue co-produced after protein extraction were considered. Regarding the liquid phase, albumin extraction yield ($SFA_{YIELD}$%), albumin content ($C_{SFA}$%) and phenolic contamination of albumins ($SFA_{PHEN}$ mg.g$^{-1}$) were measured. Concerning the solid reside, the phytic acid ($C_{PHYT}$%) and protein ($C_{PROT}$%) content were considered. A full factorial design with experimental matrix consisting on 11 runs with the central point repeated in triplicate was applied. The obtained coefficients of the models (constant terms, cubic effects, interactions) and statistical model parameters ($R^2$, RSD, p-value, lack of fit) are summarized in Table 1.

Table 1. Regression coefficient of the predicted polynomial models for sunflower albumin extraction yield ($SFA_{YIELD}$), albumin content in liquid extract ($C_{SFA}$), phenolic contamination of albumins ($SFA_{PHEN}$) and phytic acid ($C_{PHYT}$) and protein ($C_{PROT}$) content in solid residue.

| Response | Regression coefficients | | | | | | Statistic model parameters | | | |
| --- | --- | --- | --- | --- | --- | --- | --- | --- | --- | --- |
| | $\beta_0$ | $\beta_1$ | $\beta_2$ | $\beta_{11}$ | $\beta_{22}$ | $\beta_{12}$ | $R^2$ | RSD | p-value | Lack of fit |
| $SFA_{YIELD}$ | 3.92 | 25.42 | 117.0 | -3.37 | -142.8 | n.s.* | 0.953 | 3.61 | 0.000 | 0.056 |
| $C_{SFA}$ | -29.89 | 59.23 | 94.43 | 7.13 | n.s. | -25.27 | 0.981 | 3.10 | 0.000 | 0.051 |
| $SFA_{PHEN}$ | -2.96 | 1.86 | -1.17 | -0.17 | n.s. | n.s. | 0.937 | 0.15 | 0.000 | 0.311 |
| $C_{PHYT}$ | 20.00 | -6.96 | -6.75 | 0.79 | n.s. | 0.90 | 0.802 | 0.74 | 0.027 | 0.390 |
| $C_{PROT}$ | -3.20 | 20.92 | 15.77 | -2.25 | n.s. | -6.35 | 0.942 | 1.31 | 0.001 | 0.154 |
| * no significant | | | | | | | | | | |

The albumin extraction yield ($SFA_{YIELD}$%) ranges between 32.06 and 75.25 %. According to statistical analysis, pH ($x_1$), NaCl concentration ($x_2$), and both cubic terms of pH ($x_{11}$) and NaCl concentration ($x_{22}$) significantly impacted the studied response. Regression coefficient ($R^2$) was high and demonstrates that 95.3 % of data fitted model. The variation between predicted/observed plot was 3.61. The model p-value (0.000) and the lack of fit (0.056) were not significant. From these results antagonist effect of pH and ionic strength could be deduced. As observed above, DoE shows that SFA extraction yield is negatively impacted at low NaCl concentration by increasing pH (minimum around 6). This also demonstrates that SFA extraction can be considerably increased by NaCl in the whole studied pH range. The maximal extractability of albumins ($\geq$75 %) was found in the area of pH from 3.25 to 4.35 and salt addition above 0.33 mol.L$^{-1}$.

Relationship of pH and salt concentration on the albumin proportion in the liquid phase ($C_{SFA}$%) was also investigated. The obtained response function varied from 37.6 to 90.8 %. The results of ANOVA analysis show that the significant terms are pH ($x_1$), NaCl concentration ($x_2$), quadratic terms of pH ($x_{11}$) and interaction of pH and NaCl concentration ($x_{12}$) at the 95 % confidence level. The regression parameters of the obtained model ($R^2$=0.981, RSD=3.10) confirm well-fitting predicted and actual values. Furthermore, p-value of the model (0.000) and lack of fit (0.051) confirm good model performance. The impact of both pH and NaCl was low between pH 3 and 5. Under these conditions the SFAs content was relatively constant (80-90 %) whatever the ionic strength. The constant albumin proportion in relation to above-mentioned conclusion about increased SFA extraction yield in this pH region suggests that upon salt addition extraction yield of helianthinins is also improved. This finding indicates a protective effect of ionic strength against helianthinins denaturation under acid conditions. A negative effect of pH and NaCl was observed between pH 5 and 6. Obviously, this effect is reinforced by high NaCl concentration since the lowest SFA content (<40 %) was observed at pH 6 and 0.5 mol.L$^{-1}$. Thus, selective extraction of SFAs could be only achieved in lower pH values regardless of used salt concertation.

The third response studied was the amount of CQA covalently bound to SFAs ($SFA_{PHEN}$ mg.g$^{-1}$). The response surface shows a significant effect of pH ($x_1$), NaCl concentration ($x_2$), cubic term of pH ($x_{11}$). The responses varied in the range of phenolic contamination between 0.6481 and 2.1201 mg.g$^{-1}$. The plot of predicted vs actual values showing $R^2$=0.937, RSD=0.15, p-value = 0.000 and lack of fit = 0.311 confirm reliable model for predictive purposes. From these results, the antagonistic effect of pH and NaCl concentration on the irreversible phenolic association with SFAs can be observed. At low NaCl concentration, the higher pH value leads to phenolic complexation. The maximum of phenol bonding to proteins was observed at pH 5-6 without salt addition (>2 mg of CQA *per* gram of SFAs). This effect is most pronounced under strong acidic pH. CQA (the main phenolic compounds in sunflower) has a negative net charge (pKa = 3-3.5) in this pH range, while SFAs are positively charged. Hence, there is probably a high concentration of CQAs at SFA surroundings due to electrostatic interactions that might potentiate the covalent binding between these two compounds.

**2.3. Effect of pH and NaCl on phytic acid and protein content in solid residue after acidic extraction**

The nitrogen content and the level of phytic acid are known to make a large part of oilseed meal value for feed applications. Phytic acid (3-10 % on dry matter base of sunflower meals) is particularly pointed out due to decrease of biodisponibility of some minerals ($Ca^{2+}$, $Mg^{2+}$, $Zn^{2+}$, $Fe^{2+}$, $Mn^{2+}$, $Cu^{2+}$) and proteins in digestive tract by forming unabsorbable complexes (Nissar *et al.,* 2017; Kumar *et al.,* 2010; Cheryan *et al.,* 1980).

Based on RSM results the content of phytic acid content in solid residue after extraction ($C_{PHYT}$%) was found in the range from 3.14 to 6.69 %. Among all variables, pH ($x_1$), NaCl concentration ($x_2$) quadratic term of pH ($x_{11}$) and interaction of both ($x_{12}$) were kept in model equation. The interaction between factors ($x_{11}$) has no noticeable impact on the response. The obtained model fits within acceptable limits ($R^2$=0.802, RSD=0.74) in relation to actual data. Good p-value (0.027) of the model and no significant lack of fit (0.154) were also observed. The results indicate that the content of phytic acid in the solid increases considerably near mild acidic pH and reaches the higher values around pH 3 and 6. On the other hand, the negative effect of ionic strength was also observed in the region of moderate acidic pH. The highest phytate reduction (50 %) in relation to initial phytic acid content in sunflower meal (6.6 %/dm) was observed in the zone of pH 4-4.5 and 0.4 mol.L$^{-1}$ NaCl. Surprisingly, these extraction behaviours of phytic acid coincides well with the extraction profile of SFAs.

Regression coefficients and ANOVA test were also applied to study the influence of pH and NaCl concentration on protein content in sunflower solid residue ($C_{PROT}$%) ranging from 29.74-45.68 %. The analysis of variance reveals the negative effect of pH ($x_1$), NaCl concentration ($x_2$), quadratic term of pH ($x_{11}$) and pH/NaCl concentration interaction ($x_{12}$). The excellent value of $R^2$ (0.942), RSD (1.31), p-value of model (0.001) and lack of fit (0.154) indicate good accuracy of the model for simulation of protein content in solid residue. Minimum residual protein content in solid was achieved with high value of pH (about 6) and high NaCl concentration (about 0.5 mol.L$^{-1}$). In contrast, protein rich solid is produced using pH ranging from 4 to 5.5 without salt addition.

**2.4. Multi-objective optimization**

The regression equations of models were used to identify the most suitable process for solid/liquid extraction. The objective of the optimization was to maximize extraction yield and content of SFAs, while minimize phenolic contamination of albumins. Simultaneously, a value-added residual solid characterized by high protein level and reduced content of in phytic acid was desired. To reach the targets, the following constraints were selected: $SFA_{YIELD}$>70 %, $C_{SFA}$>90 %, $SFA_{PHEN}$<1.6 mg.g$^{-1}$, $C_{PHYT}$<4 % and $C_{PROT}$>40 %. The set of non-dominated solutions from multi-objective optimization was presented in Fig. 2 (grey points). According to these results, solution region was found in the design area between pH 3.8-4.2 and 0.25-0.5 mol.L$^{-1}$ NaCl. Since reduction of salt concentration leads to decrease the coast of industrial process, the lowest ionic strength was privileged. Additionally, lower pH values resulting in more selected extraction of SFAs were also considered. Considering these aspects, the extraction at pH of 4.1 and NaCl concentration of 0.25 mol.L$^{-1}$ was found to be the best trade-off between competing objectives. The proposed solution allows to achieve simultaneously satisfying theoretically responses for aqueous extract ($SFA_{YIELD}$ = 71.78 $\pm$ 2.83 %, $C_{SFA}$ = 90.80 $\pm$ 3.10 %, $SFA_{PHEN}$ = 1.52 $\pm$ 0.15 mg.g$^{-1}$) and remained after extraction solid residue ($C_{PHYT}$ = 3.98 $\pm$ 0.74 %, $C_{PROT}$ = 42.18 $\pm$ 1.31 %).

The accuracy of models to predict the process performance was verified by comparing of predicted and actual values from the extraction in the optimum of parameters. The results of model validation including prediction interval (PI), experimental value and standard error (SE%) were summarized in Table 2.

Table 2. Results of model validation for the extraction in the optimum of parameters.

| Factor | | Response | PI (p-value > 0.05) | Experimental value | SE (%) |
|---|---|---|---|---|---|
| pH | $C_{NaCl}$ (mol.L$^{-1}$) | | | | |
| 4.1 | 0.25 | $SFA_{YIELD}$ (%) | 68.21-75.43 | 61.62 | -14.20 |
| | | $C_{SFA}$ (%) | 87.70-93.90 | 88.78 | -2.23 |
| | | $SFA_{PHEN}$ (mg.g$^{-1}$) | 1.37-1.67 | 1.55 | +2.02 |
| | | $C_{PHYT}$ (%) | 3.24-4.72 | 3.74 | -6.03 |
| | | $C_{PROT}$ (%) | 40.87-43.49 | 40.97 | -2.88 |

The observed responses for $C_{SFA}$ (88.78 %), $SFA_{PHEN}$ (1.55 mg.g$^{-1}$), $C_{PHYT}$ (3.74 %) and $C_{PROT}$ (40.97 %) are included in the 95 % probably prediction intervals. Only $SFA_{YIELD}$ (61.62 %) was lower (SE = -14.20 %) in relation to estimated values. This is probably due to extremely good replicates in the central point of DoE (reproducibility=99.3 %) resulting in narrow prediction interval ($\pm$2.83 %). However, experimental data of SFA yield fit to predicted values within a satisfying limit of SE≤15 % that is commonly used for process prediction. Therefore, the selected condition guarantees the most sustainable albumin extraction from sunflower meal and the increase of the value of residual solid.

## 2.5. Characterisation of SFA obtained from acid extraction

Based on the results of multi-objective optimization, SFAs were extracted at pH 4.1 and 0.25 mol.L$^{-1}$ NaCl and purified by Size Exclusion chromatography. The chemical composition of the obtained SFAs were displayed in Table 3.

Table 3. Characterization of SFA isolate produced under optimal conditions (pH 4.1 and 0.25 mol.L$^{-1}$ NaCl).

| | | |
|---|---|---|
| Dry matter content (%) | | 94.8 |
| Protein content/dm (%) | | 93.3 |
| Albumin content (%) | | 90.3 $\pm$ 0.1 |
| Chlorogenic acid monoisomers content/dm (%) | 3-CQA | n.d.* |
| | 5-CQA | n.d. |
| | 4-CQA | n.d. |
| Acid phytic content/dm (%) | | 0.88 |
| Couleur | L* | 92.2 $\pm$ 2.9 |
| | a* | 1.3 $\pm$ 0.7 |
| | b* | 11.0 $\pm$ 1.4 |
| Sulfur-containing amino acids (mg.g$^{-1}$ protein) | | 73.31 |
| * n.d. - not detected | | |

The proteins (93.3 % proteins/dm) revealed rich in sunflower albumins (90.3 $\pm$ 0.1 %). They contained virtually no free chlorogenic acid isomers (not detected), low in phytic acid (0.88 %/dm) and its colour was close to white (L*=92.2 $\pm$ 2.9, a*=1.3 $\pm$ 0.7, b*=11.0 $\pm$ 1.4) (Fig. 3a). Regarding the composition of amino acids (Table4), almost all amino acids exceed required content in comparison with WHO/FAO/UN pattern. Only tryptophan and isoleucine concentrations were lower (69,67 and 98,82 %, respectively). However, as expected, SFAs were unusually riche in cysteine (39.23$\pm$5.47 mg.g$^{-1}$ protein) and methionine (34.08$\pm$4.82 mg.g$^{-1}$ protein). These amounts correspond to 333.24 % of recommended protein input of sulphur-containing amino acids by WHO/FAO/UN pattern.

Table 4. Amino acid composition of SFAs in comparison to the WHO requirement pattern.

| Amino acid | Amino acid composition of SFAs (mg.g*1 protein) | WHO/FAO/UN amino acid pattern (mg.g$^{-1}$ protein) |
|---|---|---|
| Histidine | 20.26 | 15.00 |
| Isoleucine | 40.19 | 30.00 |
| Leucine | 58.31 | 59.00 |
| Lysine | 58.95 | 45.00 |
| Methionine | 34.08 | 16.00 |
| Cystine | 39.23 | 6.00 |
| Methionine and cysteine | 73.31 | 22.00 |
| Phenylalanine and tyrosine | 42.55 | 30.00 |
| Threonine | 41.80 | 23.00 |
| Tryptophan | 4.18 | 6.00 |
| Valine | 42.55 | 39.00 |

The structural and functional properties of isolated SFAs were also studied. The graph in Fig. 3b shows the solubility of SFA as a function of pH ranging from 2 to 11. According to these data, sunflower albumins revealed highly soluble (close or equal to 100 %) regardless the pH solution.

In order to assess information about size distribution of SFAs under various pH values (4, 7, 9) DLS analysis were performed. A single peak with size between 3.8-4.0 d. nm (99.5-100 % of total sample volume) observed whatever the pH. The peak was attributed to low molecular weight proteins of 18-19 kDa. This confirms that the sample consisted mainly on SFAs (with theoretical molecular weight of 10-18 kDa) (Gonzalez *et al.* 2005; Gonzalez *et al.,* 2007; Kortt *et al.,* 1990; Berecz *et al.* 2010; Salgado *et al.,* 2012; Gueguen *et al.,* 2016) and no protein aggregation was detected.

On the other hand, the stability of SFA structure against various pH and thermal treatment was investigated. The far-UV CD spectra indicated that there is no change in SFA conformation state according variable pH values (under acidic (pH 4), neutral (pH 7) and alkaline (pH 9) conditions). The deconvolution of CD spectra revealed similar proportion of $\alpha$-helix (36-38 %) and $\beta$-sheet (36-37 %) elements, while random coil forms were found at slightly lower level (26-27 %). Also, DSC thermogram of SFA solution at pH 7 recording the peak of denaturation at the temperature of 120.8 °C with a $\Delta H_{cal}$ of 17.6 kcal.mol$^{-1}$ indicated extremely high thermoresistance of produced SFAs.

The foaming (a) and emulsifying proprieties (b) of SFAs were compared with commercially available soy proteins used as a reference. Generally, SFAs present higher foaming capacity (359 $\pm$ 14 % of initial solution volume) in relation to lower value obtained for soy proteins (297 $\pm$ 19 % of initial solution volume). Also, the foam formed by SFAs (about 50 % over 120 min from mixing) turned out to be more stable comparing to the more labile foam of soybean proteins (24 $\pm$ 14 % over 120 min from mixing). On the other hand, two proteins evaluated exhibited comparable ability to form emulsion (about 40-45 % of initial solution volume) and the thermal stability at 85 °C of emulsions obtained by SFAs and soy isolate were similar and very high (about 95-100 % of initial emulsion volume). Altogether, the obtained results met the principal conclusions that SFAs have an important potential as an alternative plant-based ingredient.

### 3. Conclusion

The results show that solid/liquid extraction at pH 4.1 and 0.25 mol.L$^{-1}$ NaCl resulted in selective production of SFAs (88.78 %) with low phenolic contamination (1.55 mg.g$^{-1}$) and good SFA extraction yield (61.62 %). Simultaneously, the optimal extraction condition allowed obtaining the protein-rich solid residue (40.97 %/dm) with reduced amount of antinutritional phytate (3.74 %/dm) and other non-protein compounds. The colorless SFAs isolated in the optimum of extraction parameters were perfectly soluble in water (about 100 % in all pH range 2-11) and highly resistant on both pH and temperature treatments. Also, comparable functional properties (foaming and emulsifying) of SFAs to the routinely used protein products from soybean were shown. SFAs are therefore very promising as valuable protein-based ingredient which could be successfully used in various food applications. Therefore, proposed alternative process for preparation of SFAs and residual solid is an answer for sustainable valorization of sunflower meal in food and feed industry.

REFERENCES

Albe Slabi, S., Mathé, C., Framboisier, X., Defaix, C., Mesieres, O., Galet, O., & Kapel, R. (2019). A new SE-HPLC method for simultaneous quantification of proteins and main phenolic compounds from sunflower meal aqueous extracts. Analytical and bioanalytical chemistry, 1-11.

AOAC (1995). Method 991.20. Protein (crude) in animal feed. In Official methods of analysis of the Association of Official Analytical Chemists (19th edition). Washington, DC: Association of Official Analytical Chemists.

Baudet, J., & Mosse, J. (1977). Fractionation of sunflower seed proteins. Journal of the American Oil Chemists' Society, 54(2), A82.

Bongartz, V., Brandt, L., Gehrmann, M. L., Zimmermann, B. F., Schulze-Kaysers, N., & Schieber, A. (2016). Evidence for the formation of benzacridine derivatives in alkaline-treated sunflower meal and model solutions. Molecules, 21(1), 91.

Burnett, G. R., Rigby, N. M., Mills, E. C., Belton, P. S., Fido, R. J., Tatham, A. S., & Shewry, P. R. (2002). Characterization of the emulsification properties of 2S albumins from sunflower seed. Journal of colloid and interface science, 247(1), 177-185.

Cater, C. M., Gheyasuddin, S., & Mattil, K. F. (1972). Effect of chlorogenic, quinic, and caffeic acids on the solubility and color of protein isolates, especially from sunflower seed. Cereal chemistry.

Cheryan, M., & Rackis, J. J. (1980). Phytic acid interactions in food systems. Critical Reviews in Food Science & Nutrition, 13(4), 297-335.

Defaix, C., Aymes, A., Slabi, S. A., Basselin, M., Mathé, C., Galet, O., & Kapel, R. (2019). A new size-exclusion chromatography method for fast rapeseed albumin and globulin quantification. Food chemistry, 287, 151-159.

Durante, M., Bernardi, R., Lupi, M. C., & Sabelli, P. (1989). Characterization of Helianthus annuus L. storage proteins. Journal of Agricultural and Food Chemistry, 37(4), 852-855.

FAO (2012). FAOSTAT-Agriculture, last update 11 June 2008. FAO Statistics Statistics Division 2009, access date: 25 May 2018. http://www.fao.org/docrep/016/ap106e/ap106e.pdf.

Garcia-Estepa, R. M., Guerra-Hernández, E., & Garcia-Villanova, B. (1999). Phytic acid content in milled cereal products and breads. Food research international, 32(3), 217-221.

Gonzalez-Perez, S., Merck, K. B., Vereijken, J. M., van Koningsveld, G. A., Gruppen, H., & Voragen, A. G. J. (2002). Isolation and characterization of undenatured chlorogenic acid free sunflower (Helianthus annuus) proteins. Journal of Agricultural and Food Chemistry, 50, 1713-1719.

Gonzalez-Perez, S., van Koningsveld, G. A., Vereijken, J. M., Merck, K. B., Gruppen, H., & Voragen, A. G. J. (2005). Emulsion properties of sunflower (Helianthus annuus) proteins. Journal of Agricultural and Food Chemistry, 53, 2261-2267.

Gonzalez-Perez, S., & Vereijken, J. M. (2007). Sunflower proteins: overview of their physicochemical, structural and functional properties. Journal of the Science of Food and Agriculture, 87, 2173-2191.

Gueguen, J., Walrand, S., & Bourgeois, O. (2016). Plant proteins: Context and potentialities for human food. Cahiers de Nutrition et de diététique, 51(4), 177-185.

Ivanova, P., Chalova, V., Koleva, L., Pishtiyski, I., & Perifanova-Nemska, M. (2012). Optimization of protein extraction from sunflower meal produced in Bulgaria. Bulgarian Journal of Agricultural Science, 18(2), 153-160.

Kortt, A. A., & Caldwell, J. B. (1990). Low molecular weight albumins from sunflower seed: identification of a methionine-rich albumin. Phytochemistry, 29(9), 2805-2810.

Kortt, A. A., Caldwell, J. B., Lilley, G. G., & Higgins, T. J. (1991). Amino acid and cDNA sequences of a methionine-rich 2S protein from sunflower seed (Helianthus annuus L.). European Journal of Biochemistry, 195(2), 329-334.

Kuijpers, T. F., Narváez-Cuenca, C. E., Vincken, J. P., Verloop, A. J., van Berkel, W. J., & Gruppen, H. (2012). Inhibition of enzymatic browning of chlorogenic acid by sulfur-containing compounds. Journal of agricultural and food chemistry, 60(13), 3507-3514.

Kumar, V., Sinha, A. K., Makkar, H. P., & Becker, K. (2010). Dietary roles of phytate and phytase in human nutrition: A review. Food chemistry, 120(4), 945-959.

Laemmli, U. K. (1970). Cleavage of structural proteins during the assembly of the head of bacteriophage T4. Nnature, 227(5259), 680.

Laisney, J. (1996). Process for Obtaining Oils and Fats - Oils from Seed and Kernels - General Principles of Trituration. In: Oils and Fats. A Comprehensive Treatise, vol. 1. Paris, France: Lavoisier Publishing, 1pp , 715-751.

Malik, M. A., & Saini, C. S. (2017). Polyphenol removal from sunflower seed and kernel: Effect on functional and rheological properties of protein isolates. Food Hydrocolloids, 63, 705-715.

Mazhar, H., Quayle, R., Fido, R. J., Stobart, A. K., Napier, J. A., & Shewry, P. R. (1998). Synthesis of storage reserves in developing seeds of sunflower. Phytochemistry, 48(3), 429-432.

Nioi, C., Kapel, R., Rondags, E., & Marc, I. (2012). Selective extraction, structural characterisation and antifungal activity assessment of napins from an industrial rapeseed meal. Food chemistry, 134(4), 2149-2155.

Nissar, J., Ahad, T., Naik, H. R., & Hussain, S. Z. (2017). A review phytic acid: As antinutrient or nutraceutical. Journal of Pharmacognosy and Phytochemistry, 6(6), 1554-1560.

Ordóñez, C., Asenjo, M. G., Benitez, C., & Gonzalez, J. L. (2001). Obtaining a protein concentrate from integral defatted sunflower flour. Bioresource technology, 78(2), 187-190.

Ozdal, T., Capanoglu, E., & Altay, F. (2013). A review on protein-phenolic interactions and associated changes. Food Research International, 51(2), 954-970.

Pickardt, C., Neidhart, S., Griesbach, C., Dube, M., Knauf, U., Kammerer, D. R., & Carle, R. (2009). Optimisation of mild-acidic protein extraction from defatted sunflower (Helianthus annuus L.) meal. Food Hydrocolloids, 23(7), 1966-1973.

Rahma, E. H., & Rao, M. N. (1979). Characterization of sunflower proteins. Journal of Food Science, 44(2), 579-582.

Raymond, J., Robin, J. M., & Azanza, J. L. (1995). 11 S seed storage proteins from Helianthus species (Compositae): Biochemical, size and charge heterogeneity. Plant Systematics and Evolution, 198(3-4), 195-208.

Richard-Forget, F. C., & Gauillard, F. A. (1997). Oxidation of chlorogenic acid, catechins, and 4-methylcatechol in model solutions by combinations of pear (Pyrus communis cv. Williams) polyphenol oxidase and peroxidase: a possible involvement of peroxidase in enzymatic browning. Journal of Agricultural and Food Chemistry, 45(7), 2472-2476.

Saeed, M., & Cheryan, M. (1988). Sunflower protein concentrates and isolates low in polyphenols and phytate. Journal of Food Science, 53, 1127-1131, 1143.

Salgado, P. R., Drago, S. R., Ortiz, S. E. M., Petruccelli, S., Andrich, O., Gonzalez, R. J., & Mauri, A. N. (2012). Production and characterization of sunflower (Helianthus annuus L.) protein-enriched products obtained at pilot plant scale. LWT-Food Science and Technology, 45(1), 65-72.

Sosulski, F. W., & Bakal, A. (1969). Isolated proteins from rapeseed, flax and sunflower meals. Canadian Institute of Food Technology Journal, 2(1), 28-32.

Wildermuth, S. R., Young, E. E., & Were, L. M. (2016). Chlorogenic Acid Oxidation and Its Reaction with Sunflower Proteins to Form Green-Colored Complexes. Comprehensive Reviews in Food Science and Food Safety, 15(5), 829-843.

Yoruk, R., & Marshall, M. R. (2003). Physicochemical properties and function of plant polyphenol oxidase: a review 1. Journal of Food Biochemistry, 27(5), 361-422.

**Claims**

1. A process for producing a sunflower protein isolate, said process comprising the following steps:

   (a) providing a sunflower seed press cake, preferably a sunflower seed cold press cake;
   (b) mixing said sunflower seed press cake with an aqueous NaCl solution at a pH ranging from 3 to 4.5, in order to solubilize proteins present in said sunflower seed press cake and to thus obtain a solubilised protein solution, wherein said aqueous NaCl solution has a NaCl concentration ranging from 0.2 to 0.6 mol.L$^{-1}$;
   (c) separating said solubilised protein solution from solids therein;
   (d) subjecting said solubilised protein solution obtained in step c) to one or several membrane filtration(s) to obtain a protein isolate, and
   (e) optionally drying said protein isolate to obtain a dry sunflower protein isolate.

2. The process according to anyone of claim 1, wherein:

   - said aqueous NaCl solution of step (b) has a NaCl concentration ranging from 0.2 to 0.3 mol.L$^{-1}$ and said pH is from 4.0 to 4.2, preferably said aqueous NaCl solution of step (b) has a NaCl concentration of 0.25 mol.L$^{-1}$ and said pH is of from 4.05 to 4.15, or
   - said aqueous NaCl solution of step (b) has a NaCl concentration ranging from 0.3 to 0.6 mol.L$^{-1}$ and said pH is from 3.1 to 3.5, preferably said aqueous NaCl solution of step (b) has a NaCl concentration ranging from 0.4 to 0.5 mol.L$^{-1}$ and said pH is of about 3.2 to 3.4.

3. The process according to anyone of claims 1 to 2, wherein step c) is carried out by centrifugation.

4. The process according to anyone of claims 1 to 3, wherein step d) comprises the following step: subjecting the solubilised protein solution obtained in step c) to at least one ultrafiltration step, optionally followed by at least one diafiltration step, and harvesting the protein isolate.

5. The process according to anyone of claims 1 to 3, wherein steps b) to d) are conducted at room temperature.

6. A sunflower protein isolate obtainable by the process according to anyone of claims 1 to 5, wherein it has a protein content of at least 88 wt%, preferably at least 90 wt% by weight of the total dry matter, an albumin protein content of at least 85 wt% by weight of the total proteins and a phytic acid content of less 4 wt% by weight of the total dry matter.

7. A sunflower protein isolate obtainable by the process according to anyone of claims 2 to 5, wherein in step (b) said aqueous NaCl solution has a NaCl concentration ranging from 0.2 to 0.3 mol.L$^{-1}$ and said pH is from 4.0 to 4.2, and wherein said sunflower protein isolate has at least one the following features:

   i. a total protein content of at least 90 wt% by weight of the total dry matter,
   ii. an albumin content of at least 85 wt% by weight of the total proteins,
   iii. a phytic acid content of less than 1 % by weight of the total dry matter,
   iv. no detectable free chlorogenic acid monoisomers,
   v. colour defined by the following coordinates L*=92.2 ± 2.9, a*=1.3 ± 0.7, b*=11.0 ± 1.4, ΔE = 15 or less,
   vi. a solubility of at least 95 %, in an aqueous solution at a pH ranging from 2 to 11,
   vii. a cysteine content ranging from 30,5 to 49 mg.g$^{-1}$ of total protein in said protein isolate,
   viii. a methionine content ranging from 26,5 to 43 mg.g$^{-1}$ of total protein in said protein isolate,
   ix. an amino acid content as defined in Table 4.

8. A food or beverage product comprising a sunflower seed protein isolate of claim 6 or 7.

9. A sunflower seed protein composition (solids) obtainable or obtained by the process according to any one of claims 1, 2, 3 and 5 after step (c) and before step d), and wherein said sunflower protein composition has a protein content of at least 35 wt% by weight of the total dry matter (/dm) and optionally less 4 wt%/dm of phytic acid

**10.** Use of the sunflower seed protein composition of claim 9 as feed, dietary supplement or additive, for animal feeding.

Figure 1

Figure 2

Figure 3

Europäisches
Patentamt

European
Patent Office

Office européen
des brevets

# EUROPEAN SEARCH REPORT

Application Number

EP 19 30 5608

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 435 319 A (PEARCE ROBERT J [AU]) 6 March 1984 (1984-03-06) | 1-5 | INV. A23J1/14 |
| A | * examples 1-3 (in particular, table 8); claims 1-9* | 6-10 | A23J3/14 A23L2/66 A23L11/30 B01D61/14 |
| X | WO 2013/013949 A1 (DSM IP ASSETS BV [NL]; WNUKOWSKI PIOTR [NL] ET AL.) 31 January 2013 (2013-01-31) | 6-10 | |
| Y | * page 8, lines 4-8; claims 1-17 * | 1-5 | |
| X | WO 03/028473 A1 (BIOVELOP INTERNAT B V [NL]; KVIST STEN [SE] ET AL.) 10 April 2003 (2003-04-10) | 6-10 | |
| A | * page 8, lines 8-25; claims 1-32 * | 1-5 | |
| X,D | SERGIO GONZÁLEZ-PÉREZ ET AL: "Emulsion Properties of Sunflower ( Helianthus annuus ) Proteins", JOURNAL OF AGRICULTURAL AND FOOD CHEMISTRY, vol. 1-653, no. 6, 1 March 2005 (2005-03-01), pages 2261-2267, XP55453966, US ISSN: 0021-8561, DOI: 10.1021/jf0486388 | 6-10 | |
| A | * page 2262 * | 1-5 | |

-/--

| | TECHNICAL FIELDS SEARCHED (IPC) |
|---|---|
| | A23J A23L B01D |

The present search report has been drawn up for all claims

| Place of search | Date of completion of the search | Examiner |
|---|---|---|
| Munich | 6 September 2019 | Georgopoulos, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

Application Number

EP 19 30 5608

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | SHAMANTHAKA SASTRY M C ET AL: "Binding of chlorogenic acid by the isolated polyphenol-free 11S protein of sunflower (Helianthus annuus) seed", JOURNAL OF AGRICULTURAL AND FOOD CHEMISTRY, AMERICAN CHEMICAL SOCIETY, BOOKS AND JOURNALS DIVISION, US, vol. 38, no. 12, 1 December 1990 (1990-12-01), pages 2103-2110, XP002197461, ISSN: 0021-8561, DOI: 10.1021/JF00102A001 | 1-5 | |
| A | * page 2104 * | 6-10 | |
| Y | CLAUDIA PICKARDT ET AL: "Isoelectric protein precipitation from mild-acidic extracts of de-oiled sunflower (L.) press cake", EUROPEAN FOOD RESEARCH AND TECHNOLOGY, SPRINGER BERLIN HEIDELBERG, vol. 233, no. 1, 25 May 2011 (2011-05-25), pages 31-44, XP019918510, ISSN: 1438-2385, DOI: 10.1007/S00217-011-1489-6 | 1-5 | |
| A | * pages 32-34 * | 6-10 | TECHNICAL FIELDS SEARCHED (IPC) |

The present search report has been drawn up for all claims

| Place of search | Date of completion of the search | Examiner |
|---|---|---|
| Munich | 6 September 2019 | Georgopoulos, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 19 30 5608

This annex lists the patent family members relating to the patent documents cited in the above-mentioned European search report.
The members are as contained in the European Patent Office EDP file on
The European Patent Office is in no way liable for these particulars which are merely given for the purpose of information.

06-09-2019

| Patent document cited in search report | | Publication date | Patent family member(s) | | Publication date |
|---|---|---|---|---|---|
| US 4435319 | A | 06-03-1984 | AU | 569702 B2 | 18-02-1988 |
| | | | JP | S5963139 A | 10-04-1984 |
| | | | US | 4435319 A | 06-03-1984 |
| WO 2013013949 | A1 | 31-01-2013 | AU | 2012289115 A1 | 06-02-2014 |
| | | | CA | 2843177 A1 | 31-01-2013 |
| | | | CN | 103732076 A | 16-04-2014 |
| | | | DK | 2736351 T3 | 11-04-2016 |
| | | | EA | 201400177 A1 | 30-05-2014 |
| | | | EP | 2736351 A1 | 04-06-2014 |
| | | | ES | 2565655 T3 | 06-04-2016 |
| | | | HU | E026992 T2 | 29-08-2016 |
| | | | NZ | 620272 A | 26-02-2016 |
| | | | UA | 113181 C2 | 26-12-2016 |
| | | | US | 2015073127 A1 | 12-03-2015 |
| | | | WO | 2013013949 A1 | 31-01-2013 |
| WO 03028473 | A1 | 10-04-2003 | AT | 385701 T | 15-03-2008 |
| | | | BR | 0213055 A | 28-09-2004 |
| | | | CA | 2462538 A1 | 10-04-2003 |
| | | | EP | 1437944 A1 | 21-07-2004 |
| | | | JP | 2005503816 A | 10-02-2005 |
| | | | RU | 2295250 C2 | 20-03-2007 |
| | | | US | 2005136162 A1 | 23-06-2005 |
| | | | WO | 03028473 A1 | 10-04-2003 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *CHEMICAL ABSTRACTS,* 7647-14-201
- *CHEMICAL ABSTRACTS,* 1310-73-2
- *CHEMICAL ABSTRACTS,* 6381-92-6
- *CHEMICAL ABSTRACTS,* 7647-01-0
- *CHEMICAL ABSTRACTS,* 77-86-1
- *CHEMICAL ABSTRACTS,* 56-40-6
- *CHEMICAL ABSTRACTS,* 7705-08-0
- *CHEMICAL ABSTRACTS,* 7757-82-6
- *CHEMICAL ABSTRACTS,* 304851-84-1
- **ALBE SLABI, S. ; MATHÉ, C. ; FRAMBOISIER, X. ; DEFAIX, C. ; MESIERES, O. ; GALET, O. ; KAPEL, R.** A new SE-HPLC method for simultaneous quantification of proteins and main phenolic compounds from sunflower meal aqueous extracts. *Analytical and bioanalytical chemistry,* 2019, 1-11
- Method 991.20. Protein (crude) in animal feed. Official methods of analysis of the Association of Official Analytical Chemists. Association of Official Analytical Chemists, 1995
- **BAUDET, J. ; MOSSE, J.** Fractionation of sunflower seed proteins. *Journal of the American Oil Chemists' Society,* 1977, vol. 54 (2), A82
- **BONGARTZ, V. ; BRANDT, L. ; GEHRMANN, M. L. ; ZIMMERMANN, B. F. ; SCHULZE-KAYSERS, N. ; SCHIEBER, A.** Evidence for the formation of benzacridine derivatives in alkaline-treated sunflower meal and model solutions. *Molecules,* 2016, vol. 21 (1), 91
- **BURNETT, G. R. ; RIGBY, N. M. ; MILLS, E. C. ; BELTON, P. S. ; FIDO, R. J. ; TATHAM, A. S. ; SHEWRY, P. R.** Characterization of the emulsification properties of 2S albumins from sunflower seed. *Journal of colloid and interface science,* 2002, vol. 247 (1), 177-185
- **CATER, C. M. ; GHEYASUDDIN, S. ; MATTIL, K. F.** Effect of chlorogenic, quinic, and caffeic acids on the solubility and color of protein isolates, especially from sunflower seed. *Cereal chemistry,* 1972
- **CHERYAN, M. ; RACKIS, J. J.** Phytic acid interactions in food systems. *Critical Reviews in Food Science & Nutrition,* 1980, vol. 13 (4), 297-335
- **DEFAIX, C. ; AYMES, A. ; SLABI, S. A. ; BASSELIN, M. ; MATHÉ, C. ; GALET, O. ; KAPEL, R.** A new size-exclusion chromatography method for fast rapeseed albumin and globulin quantification. *Food chemistry,* 2019, vol. 287, 151-159

- **DURANTE, M. ; BERNARDI, R. ; LUPI, M. C. ; SABELLI, P.** Characterization of Helianthus annuus L. storage proteins. *Journal of Agricultural and Food Chemistry,* 1989, vol. 37 (4), 852-855
- FAOSTAT-Agriculture. *FAO Statistics Statistics Division 2009, access date: 25 May 2018,* 11 June 2008, http://www.fao.org/docrep/016/ap106e/ap106e.pdf
- **GARCIA-ESTEPA, R. M. ; GUERRA-HERNÁNDEZ, E. ; GARCIA-VILLANOVA, B.** Phytic acid content in milled cereal products and breads. *Food research international,* 1999, vol. 32 (3), 217-221
- **GONZALEZ-PEREZ, S. ; MERCK, K. B. ; VEREIJKEN, J. M. ; VAN KONINGSVELD, G. A. ; GRUPPEN, H. ; VORAGEN, A. G. J.** Isolation and characterization of undenatured chlorogenic acid free sunflower (Helianthus annuus) proteins. *Journal of Agricultural and Food Chemistry,* 2002, vol. 50, 1713-1719
- **GONZALEZ-PEREZ, S. ; VAN KONINGSVELD, G. A. ; VEREIJKEN, J. M. ; MERCK, K. B. ; GRUPPEN, H. ; VORAGEN, A. G. J.** Emulsion properties of sunflower (Helianthus annuus) proteins. *Journal of Agricultural and Food Chemistry,* 2005, vol. 53, 2261-2267
- **GONZALEZ-PEREZ, S. ; VEREIJKEN, J. M.** Sunflower proteins: overview of their physicochemical, structural and functional properties. *Journal of the Science of Food and Agriculture,* 2007, vol. 87, 2173-2191
- **GUEGUEN, J. ; WALRAND, S. ; BOURGEOIS, O.** Plant proteins: Context and potentialities for human food. *Cahiers de Nutrition et de diététique,* 2016, vol. 51 (4), 177-185
- **IVANOVA, P. ; CHALOVA, V. ; KOLEVA, L. ; PISHTIYSKI, I. ; PERIFANOVA-NEMSKA, M.** Optimization of protein extraction from sunflower meal produced in Bulgaria. *Bulgarian Journal of Agricultural Science,* 2012, vol. 18 (2), 153-160
- **KORTT, A. A. ; CALDWELL, J. B.** Low molecular weight albumins from sunflower seed: identification of a methionine-rich albumin. *Phytochemistry,* 1990, vol. 29 (9), 2805-2810
- **KORTT, A. A. ; CALDWELL, J. B. ; LILLEY, G. G. ; HIGGINS, T. J.** Amino acid and cDNA sequences of a methionine-rich 2S protein from sunflower seed (Helianthus annuus L.). *European Journal of Biochemistry,* 1991, vol. 195 (2), 329-334

- **KUIJPERS, T. F. ; NARVÁEZ-CUENCA, C. E. ; VINCKEN, J. P. ; VERLOOP, A. J. ; VAN BERKEL, W. J. ; GRUPPEN, H.** Inhibition of enzymatic browning of chlorogenic acid by sulfur-containing compounds. *Journal of agricultural and food chemistry,* 2012, vol. 60 (13), 3507-3514
- **KUMAR, V. ; SINHA, A. K. ; MAKKAR, H. P. ; BECKER, K.** Dietary roles of phytate and phytase in human nutrition: A review. *Food chemistry,* 2010, vol. 120 (4), 945-959
- **LAEMMLI, U. K.** Cleavage of structural proteins during the assembly of the head of bacteriophage T4. *Nnature,* 1970, vol. 227 (5259), 680
- Process for Obtaining Oils and Fats - Oils from Seed and Kernels - General Principles of Trituration. **LAISNEY, J.** Oils and Fats. A Comprehensive Treatise. Lavoisier Publishing, 1996, vol. 1, 715-751
- **MALIK, M. A. ; SAINI, C. S.** Polyphenol removal from sunflower seed and kernel: Effect on functional and rheological properties of protein isolates. *Food Hydrocolloids,* 2017, vol. 63, 705-715
- **MAZHAR, H. ; QUAYLE, R. ; FIDO, R. J. ; STOBART, A. K. ; NAPIER, J. A. ; SHEWRY, P. R.** Synthesis of storage reserves in developing seeds of sunflower. *Phytochemistry,* 1998, vol. 48 (3), 429-432
- **NIOI, C. ; KAPEL, R. ; RONDAGS, E. ; MARC, I.** Selective extraction, structural characterisation and antifungal activity assessment of napins from an industrial rapeseed meal. *Food chemistry,* 2012, vol. 134 (4), 2149-2155
- **NISSAR, J. ; AHAD, T. ; NAIK, H. R. ; HUSSAIN, S. Z.** A review phytic acid: As antinutrient or nutraceutical. *Journal of Pharmacognosy and Phytochemistry,* 2017, vol. 6 (6), 1554-1560
- **ORDÓÑEZ, C. ; ASENJO, M. G. ; BENITEZ, C. ; GONZALEZ, J. L.** Obtaining a protein concentrate from integral defatted sunflower flour. *Bioresource technology,* 2001, vol. 78 (2), 187-190
- **OZDAL, T. ; CAPANOGLU, E. ; ALTAY, F.** A review on protein-phenolic interactions and associated changes. *Food Research International,* 2013, vol. 51 (2), 954-970
- **PICKARDT, C. ; NEIDHART, S. ; GRIESBACH, C. ; DUBE, M. ; KNAUF, U. ; KAMMERER, D. R. ; CARLE, R.** Optimisation of mild-acidic protein extraction from defatted sunflower (Helianthus annuus L.) meal. *Food Hydrocolloids,* 2009, vol. 23 (7), 1966-1973
- **RAHMA, E. H. ; RAO, M. N.** Characterization of sunflower proteins. *Journal of Food Science,* 1979, vol. 44 (2), 579-582
- **RAYMOND, J. ; ROBIN, J. M. ; AZANZA, J. L.** 11 S seed storage proteins fromHelianthus species (Compositae): Biochemical, size and charge heterogeneity. *Plant Systematics and Evolution,* 1995, vol. 198 (3-4), 195-208
- **RICHARD-FORGET, F. C. ; GAUILLARD, F. A.** Oxidation of chlorogenic acid, catechins, and 4-methylcatechol in model solutions by combinations of pear (Pyrus communis cv. Williams) polyphenol oxidase and peroxidase: a possible involvement of peroxidase in enzymatic browning. *Journal of Agricultural and Food Chemistry,* 1997, vol. 45 (7), 2472-2476
- **SAEED, M. ; CHERYAN, M.** Sunflower protein concentrates and isolates low in polyphenols and phytate. *Journal of Food Science,* 1988, vol. 53, 1127-1131, 1143
- **SALGADO, P. R. ; DRAGO, S. R. ; ORTIZ, S. E. M. ; PETRUCCELLI, S. ; ANDRICH, O. ; GONZALEZ, R. J. ; MAURI, A. N.** Production and characterization of sunflower (Helianthus annuus L.) protein-enriched products obtained at pilot plant scale. *LWT-Food Science and Technology,* 2012, vol. 45 (1), 65-72
- **SOSULSKI, F. W. ; BAKAL, A.** Isolated proteins from rapeseed, flax and sunflower meals. *Canadian Institute of Food Technology Journal,* 1969, vol. 2 (1), 28-32
- **WILDERMUTH, S. R. ; YOUNG, E. E. ; WERE, L. M.** Chlorogenic Acid Oxidation and Its Reaction with Sunflower Proteins to Form Green-Colored Complexes. *Comprehensive Reviews in Food Science and Food Safety,* 2016, vol. 15 (5), 829-843
- **YORUK, R. ; MARSHALL, M. R.** Physicochemical properties and function of plant polyphenol oxidase: a review 1. *Journal of Food Biochemistry,* 2003, vol. 27 (5), 361-422